# FASCICULE DE BREVET EUROPEEN

(11) **EP 3 490 708 B1**
(45) Date de publication et mention de la délivrance du brevet: **14.04.2021**
(21) Numéro de dépôt: 17730827.7
(22) Date de dépôt: 22.06.2017
(51) Int. Cl.: B01J 31/04, B01J 23/882, B01J 27/051, B01J 27/19, C10G 45/08, C10G 45/12, C10G 11/05, B01J 37/20, B01J 37/02, B01J 37/08, B01J 35/10, B01J 23/85, B01J 38/52, B01J 38/62, B01J 23/94, B01J 27/128, B01J 27/28

(54) **CATALYSEUR A BASE DE 2-ACÉTYLBUTYROLACTONE ET/OU DE SES PRODUITS D'HYDROLYSE ET SON UTILISATION DANS UN PROCÉDÉ D'HYDROTRAITEMENT ET/OU D'HYDROCRAQUAGE**
AUF ACETLYBUTYROLACTON UND/ODER DESSEN HYDROLYSEPRODUKTE BASIERENDER KATALYSATOR UND DESSEN VERWENDUNG IN EINEM VERFAHREN ZUR HYDRIERBEHANDLUNG UND/ODER ZUM HYDROSPALTEN
CATALYST BASED ON ACETLYBUTYROLACTONE AND/OR ITS HYDROLYSIS PRODUCTS AND THE USE THEREOF IN A PROCESS OF HYDROTREATING AND/OR HYDROCRACKING

(30) Priorité: 28.07.2016 FR 1657307
(43) Date de publication de la demande: 05.06.2019
(73) Titulaire: IFP Energies nouvelles, 92852 Rueil-Malmaison (FR)
(72) Inventeur: CARRETTE, Pierre-Louis, 69005 Lyon (FR)
(86) Numéro de dépôt international: PCT/EP2017/065384
(87) Numéro de publication internationale: WO 2018/019491

(56) Documents cités:
- EP-A1- 2 174 711
- WO-A1-2013/093229
- US-A1- 2014 305 842
- PASHIGREVA A V ET AL: "Activity and sulfidation behavior of the CoMo/Al"2O"3 hydrotreating catalyst: The effect of drying conditions", CATALYSIS TODAY, ELSEVIER, AMSTERDAM, NL, vol. 149, no. 1-2, 15 janvier 2010 (2010-01-15), pages 19-27, XP026815655, ISSN: 0920-5861 [extrait le 2009-08-28]

## Description

L'invention concerne un catalyseur additivé avec la 2-acétylbutyrolactone, l'acide 2-(2-hydroxyéthyl)-3-oxobutanoïque et/ou l'acide 3-hydroxy-2-(2-hydroxyéthyl)-2-butenoïque, sa méthode de préparation et son utilisation dans le domaine de l'hydrotraitement et/ou de l'hydrocraquage.

Habituellement, un catalyseur d'hydrotraitement de coupes hydrocarbonées a pour but d'éliminer les composés soufrés ou azotés contenus dans celles-ci afin de mettre par exemple un produit pétrolier aux spécifications requises (teneur en soufre, teneur en aromatiques etc..) pour une application donnée (carburant automobile, essence ou gazole, fioul domestique, carburéacteur). Il peut également s'agir de prétraiter cette charge afin d'en éliminer les impuretés ou de l'hydrogéner avant de lui faire subir différents procédés de transformation pour en modifier les propriétés physico-chimiques, tels que par exemple les procédés de reformage, d'hydrocraquage de distillats sous vide, de craquage catalytique, d'hydroconversion de résidus atmosphériques ou sous vide. La composition et l'utilisation des catalyseurs d'hydrotraitement sont particulièrement bien décrites dans l'article de B. S Clausen, H. T. Topsøe, et F.E. Massoth, issu de l'ouvrage Catalysis Science and Technology, volume 11 (1996), Springer-Verlag.

Le durcissement des normes de pollution automobile dans la communauté européenne (Journal Officiel de l'Union européenne, L76, 22 mars 2003, Directive 2003/70/CE, pages L76/10-L76/19) a contraint les raffineurs à réduire très fortement la teneur en soufre dans les carburants diesel et les essences (au maximum 10 parties par million poids (ppm) de soufre au 1^{er} janvier 2009, contre 50 ppm au 1^{er} janvier 2005). Par ailleurs, les raffineurs se trouvent contraints d'utiliser des charges de plus en plus réfractaires aux procédés d'hydrotraitement d'une part parce que les bruts sont de plus en plus lourds et contiennent par conséquent de plus en plus d'impuretés, d'autre part du fait de l'augmentation des procédés de conversion dans les raffineries. En effet, ceux-ci génèrent des coupes plus difficiles à hydrotraiter que les coupes directement issues de la distillation atmosphérique. Par plus difficile à hydrotraiter, on entend habituellement des températures de fonctionnement plus élevées pour atteindre une même teneur en soufre dans l'effluent, et par voie de conséquence des durées de cycle qui peuvent être réduites. Ces charges nécessitent des catalyseurs possédant des fonctions hydrodésulfurantes et hydrogénantes fortement améliorées par rapport aux catalyseurs traditionnels.

En outre, les procédés de conversion comme le craquage catalytique ou l'hydrocraquage utilisent des catalyseurs possédant une fonction acide, ce qui les rend particulièrement sensibles à la présence d'impuretés azotées, et particulièrement de composés azotées basiques. Il est donc nécessaire d'utiliser des catalyseurs de prétraitement de ces charges de façon à enlever ces composés.

Les catalyseurs d'hydrotraitement classiques comprennent généralement un support d'oxyde et une phase active à base de métaux des groupes VIB et VIII sous leurs formes oxydes ainsi que du phosphore. La préparation de ces catalyseurs comprend généralement une étape d'imprégnation des métaux et du phosphore sur le support, suivie d'un séchage et d'une calcination permettant d'obtenir la phase active sous leurs formes oxydes. Avant leur utilisation dans une réaction d'hydrotraitement et/ou d'hydrocraquage, ces catalyseurs sont généralement soumis à une sulfuration afin de former l'espèce active.

L'ajout d'un composé organique sur les catalyseurs d'hydrotraitement pour améliorer leur activité a été préconisé par l'Homme du métier, notamment pour des catalyseurs qui ont été préparés par imprégnation suivie d'un séchage sans calcination ultérieure. Ces catalyseurs sont souvent appelés «catalyseurs séchés additivés».

De nombreux documents décrivent l'utilisation de différentes gammes de composés organiques en tant qu'additifs, tels que des composés organiques contenant de l'azote et/ou des composés organiques contenant de l'oxygène.

Une famille de composés maintenant bien connue de la littérature concerne les composés azotés chélatants (EP0181035, EP1043069 et US6540908) avec, à titre d'exemple, l'acide éthylènediaminetétraacétique (EDTA), l'éthylènediamine, la diéthylènetriamine ou l'acide nitrilotriacétique (NTA).

Dans la famille des composés organiques contenant de l'oxygène, l'utilisation de mono, -di- ou polyalcools éventuellement éthérifiés est décrite dans les documents WO96/41848, WO01/76741, US4012340, US3954673, EP601722, et WO2005/035691. L'art antérieur évoque plus rarement des additifs comportant des fonctions ester (EP1046424, WO2006/077326).

On trouve aussi plusieurs brevets qui revendiquent l'utilisation d'acides carboxyliques (EP1402948, EP0482817). En particulier, dans le document EP0482817, l'acide citrique, mais aussi les acides tartrique, butyrique, hydroxyhexanoïque, malique, gluconique, glycérique, glycolique, hydroxybutyrique ont été décrits. La spécificité réside dans le séchage qui doit être conduit à une température inférieure à 200°C.

Les documents US2014/353213 et US2014/305842 décrivent l'utilisation de composés hétérocycliques, contenant de l'oxygène ou de l'azote dans le cycle, tels que des lactames, des oxacycloalcanes ou des lactones. En ce qui concerne les lactones notamment, ces documents citent la β-proprio-lactone, la γ-butyrolactone et la δ-valerolactone.

Cependant, aucun des documents portant sur les additifs ne décrit l'utilisation de la 2-acétylbutyrolactone, ni même de l'acide 2-(2-hydroxyéthyl)-3-oxobutanoïque et/ou l'acide 3-hydroxy-2-(2-hydroxyéthyl)-2-butenoïque qui peuvent être obtenus directement ou indirectement par hydrolyse de la 2-acétylbutyrolactone.

Quels que soient les composés choisis, les modifications induites ne permettent pas toujours d'accroître suffisamment les performances du catalyseur pour faire face aux spécifications concernant les teneurs en soufre et/ou azote des carburants. De plus, il est souvent très compliqué de procéder à leur déploiement industriel tant les méthodes sont complexes à mettre en œuvre.

En conséquence, il ressort comme indispensable, pour les fabricants de catalyseurs, de trouver de nouveaux catalyseurs d'hydrotraitement et/ou d'hydrocraquage à performances améliorées.

### Résumé

L'invention concerne un catalyseur comprenant un support à base d'alumine ou de silice ou de silice-alumine, au moins un élément du groupe VIII, au moins un élément du groupe VIB et au moins un additif choisi parmi la 2-acétylbutyrolactone et/ou ses produits d'hydrolyse, l'acide 2-(2-hydroxyéthyl)-3-oxobutanoïque et l'acide 3-hydroxy-2-(2-hydroxyéthyl)-2-butenoïque.

Dans la suite du texte, on entend par produits d'hydrolyse de la 2-acétylbutyrolactone, l'acide 2-(2-hydroxyéthyl)-3-oxobutanoïque et/ou l'acide 3-hydroxy-2-(2-hydroxyéthyl)-2-butenoïque.

La demanderesse a en effet constaté que l'utilisation d'au moins un additif choisi parmi la 2-acétylbutyrolactone et/ou ses produits d'hydrolyse en tant qu'additif(s) organique(s) sur un catalyseur contentant au moins un élément du groupe VIII et au moins un élément du groupe VIB, permettait d'obtenir un catalyseur d'hydrotraitement et/ou d'hydrocraquage montrant des performances catalytiques améliorées.

En effet, le catalyseur selon l'invention montre une activité augmentée par rapport aux catalyseurs non additivés et aux catalyseurs séchés additivés connus. Typiquement, grâce à l'augmentation de l'activité, la température nécessaire pour atteindre une teneur en soufre ou azote souhaitée (par exemple 10 ppm de soufre dans le cas d'une charge gazole, en mode ULSD ou Ultra Low Sulfur Diesel selon la terminologie anglo-saxonne) peut être baissée. De même, la stabilité est augmentée, car la durée de cycle est prolongée grâce à la réduction de température nécessaire.

Le catalyseur selon la présente invention est en plus facile à préparer du fait d'une solubilité élevée de la 2-acétylbutyrolactone et/ou de ses produits d'hydrolyse dans l'eau ou tout autre solvant polaire protique.

Selon une variante, la teneur en élément du groupe VIB est comprise entre 5 et 40 % poids exprimé en oxyde de métal du groupe VIB par rapport au poids total du catalyseur, la teneur en élément du groupe VIII est comprise entre 1 et 10 % poids exprimé en oxyde de métal du groupe VIII par rapport au poids total du catalyseur.

Selon une variante, le rapport molaire élément du groupe VIII sur élément du groupe VIB dans le catalyseur est compris entre 0,1 et 0,8.

Selon une variante, le catalyseur contient en outre du phosphore, la teneur en phosphore étant comprise entre 0,1 et 20 % poids exprimée en P₂O₅ par rapport au poids total du catalyseur et le rapport molaire phosphore sur l'élément du groupe VIB dans le catalyseur est supérieur ou égal à 0,05.

Selon une variante, la teneur totale en additif(s) choisi parmi la 2-acétylbutyrolactone, l'acide 2-(2-hydroxyéthyl)-3-oxobutanoïque et/ou l'acide 3-hydroxy-2-(2-hydroxyéthyl)-2-butenoïque est comprise entre 1 et 45 % poids par rapport au poids total du catalyseur.

Selon une variante, le catalyseur contient en outre un composé organique autre que l'additif choisi parmi la 2-acétylbutyrolactone et/ou ses produits d'hydrolyse, ledit composé organique contenant de l'oxygène et/ou de l'azote et/ou du soufre. Selon cette variante, le composé organique est de préférence choisi parmi un composé comportant une ou plusieurs fonctions chimiques choisies parmi une fonction carboxylique, alcool, thiol, thioéther, sulfone, sulfoxyde, éther, aldéhyde, cétone, ester, carbonate, amine, nitrile, imide, oxime, urée et amide. De préférence, il est choisi parmi le triéthylèneglycol, le diéthylèneglycol, l'éthylèneglycol, l'acide éthylènediaminetétra-acétique (EDTA), l'acide maléique, l'acide malonique, l'acide citrique, le diméthylformamide, la N-méthylpyrrolidone, le carbonate de propylène, la bicine, ou la tricine.

Selon une variante, le support contient de 0,1 à 50% poids de zéolithe.

Selon une variante, le catalyseur est au moins partiellement sulfuré.

L'invention concerne également le procédé de préparation dudit catalyseur comprenant les étapes suivantes :
a) on met en contact au moins un composant d'un élément du groupe VIB, au moins un composant d'un élément du groupe VIII, au moins un additif choisi parmi la 2-acétylbutyrolactone, l'acide 2-(2-hydroxyéthyl)-3-oxobutanoïque et/ou l'acide 3-hydroxy-2-(2-hydroxyéthyl)-2-butenoïque et éventuellement du phosphore avec un support à base d'alumine ou de silice ou de silice-alumine, ou on met en contact un catalyseur régénéré contenant un support à base d'alumine ou de silice ou de silice-alumine, au moins un composant d'un élément du groupe VIB, au moins un composant d'un élément du groupe VIII et éventuellement du phosphore avec au moins un additif choisi parmi la 2-acétylbutyrolactone, l'acide 2-(2-hydroxyéthyl)-3-oxobutanoïque et/ou l'acide 3-hydroxy-2-(2-hydroxyéthyl)-2-butenoïque, de manière à obtenir un précurseur de catalyseur,
b) on sèche ledit précurseur de catalyseur issu de l'étape a) à une température inférieure à 200°C, sans le calciner ultérieurement.

Selon une variante, l'étape a) est l'étape suivante :
a')on imprègne un support à base d'alumine ou de silice ou de silice-alumine par au moins une solution contenant au moins un élément du groupe VIB, au moins un élément du groupe VIII, au moins un additif choisi parmi la 2-acétylbutyrolactone, l'acide 2-(2-hydroxyéthyl)-3-oxobutanoïque et/ou l'acide 3-hydroxy-2-(2-hydroxyéthyl)-2-butenoïque et éventuellement du phosphore de manière à obtenir un précurseur de catalyseur.

Selon une autre variante, l'étape a) comprend les étapes suivantes :
a1) on imprègne un support à base d'alumine ou de silice ou de silice-alumine par au moins une solution contenant au moins un élément du groupe VIB, au moins un élément du groupe VIII et éventuellement du phosphore pour obtenir un support imprégné,
a2) on sèche le support imprégné obtenu à l'étape a1) à une température inférieure à 200°C pour obtenir un support imprégné séché, et optionnellement on calcine le support imprégné séché pour obtenir un support imprégné calciné,
a3) on imprègne le support imprégné séché et éventuellement calciné obtenu à l'étape a2) par une solution d'imprégnation comprenant au moins un additif choisi parmi la 2-acétylbutyrolactone, l'acide 2-(2-hydroxyéthyl)-3-oxobutanoïque et/ou l'acide 3-hydroxy-2-(2-hydroxyéthyl)-2-butenoïque de manière à obtenir un précurseur de catalyseur,
a4) optionnellement, on laisse maturer le précurseur de catalyseur obtenu à l'étape a3).

Selon une autre variante, l'étape a) comprend les étapes suivantes :
a1') on prépare un support comprenant au moins au moins un additif choisi parmi la 2-acétylbutyrolactone, l'acide 2-(2-hydroxyéthyl)-3-oxobutanoïque et/ou l'acide 3-hydroxy-2-(2-hydroxyéthyl)-2-butenoïque et éventuellement au moins une partie du phosphore,
a2') on imprègne le support obtenu à l'étape a1') par une solution d'imprégnation comprenant au moins un élément du groupe VIB, au moins un élément du groupe VIII et éventuellement du phosphore de manière à obtenir un précurseur de catalyseur,
a3') optionnellement, on laisse maturer le précurseur de catalyseur obtenu à l'étape a2').

Selon une autre variante, l'étape a) comprend les étapes suivantes :
a1") on met en contact par co-imprégnation une solution contant au moins un élément du groupe VIB, au moins un élément du groupe VIII, au moins un composé organique contenant de l'oxygène et/ou de l'azote et/ou du soufre, et éventuellement du phosphore avec un support à base d'alumine ou de silice ou de silice-alumine de manière à obtenir un support imprégné,
a2")on sèche le support imprégné issu de l'étape a1") à une température inférieure à 200°C, sans le calciner ultérieurement, pour obtenir un support imprégné séché,
a3")on met en contact le support imprégné séché issu de l'étape a2") avec une solution d'au moins un composé organique contenant de l'oxygène et/ou de l'azote et/ou du soufre identique ou différent de celui utilisé dans l'étape a1 ") de manière à obtenir un précurseur de catalyseur,
a4")optionnellement, on laisse maturer le précurseur de catalyseur obtenu à l'étape a3"),
et au moins un des composés organiques de étape a1 ") ou de l'étape a3") est choisi parmi la 2-acétylbutyrolactone, l'acide 2-(2-hydroxyéthyl)-3-oxobutanoïque et/ou l'acide 3-hydroxy-2-(2-hydroxyéthyl)-2-butenoïque.

Selon une variante, lorsqu'on souhaite préparer le catalyseur selon l'invention à partir d'un catalyseur régénéré, l'étape a) du procédé de préparation comprend les étapes suivantes :
a1"') on imprègne un catalyseur régénéré contenant un support à base d'alumine ou de silice ou de silice-alumine, au moins un composant d'un élément du groupe VIB, au moins un composant d'un élément du groupe VIII et éventuellement du phosphore par une solution d'imprégnation comprenant au moins un additif choisi parmi la 2-acétylbutyrolactone, l'acide 2-(2-hydroxyéthyl)-3-oxobutanoïque et/ou l'acide 3-hydroxy-2-(2-hydroxyéthyl)-2-butenoïque de manière à obtenir un précurseur de catalyseur,
a2"') optionnellement, on laisse maturer le précurseur de catalyseur obtenu à l'étape a1"').

Selon une variante, le rapport molaire total du ou des additif(s) choisi(s) parmi la 2-acétylbutyrolactone, l'acide 2-(2-hydroxyéthyl)-3-oxobutanoïque et/ou l'acide 3-hydroxy-2-(2-hydroxyéthyl)-2-butenoïque par élément(s) du groupe VIII est compris entre 0,1 et 5,0 mol/mol.

L'invention concerne également l'utilisation du catalyseur selon l'invention ou préparé selon le procédé de préparation selon l'invention dans un procédé d'hydrotraitement et/ou d'hydrocraquage de coupes hydrocarbonées.

Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC.

On entend par hydrotraitement des réactions englobant notamment l'hydrodésulfuration (HDS), l'hydrodéazotation (HDN) et l'hydrogénation des aromatiques (HDA).

### Description détaillée de l'invention

### Catalyseur

Le catalyseur selon l'invention est un catalyseur additivé avec au moins un additif choisi parmi la 2-acétylbutyrolactone et/ou ses produits d'hydrolyse. Plus particulièrement, le catalyseur selon l'invention comprend un support à base d'alumine ou de silice ou de silice-alumine, au moins un élément du groupe VIII, au moins un élément du groupe VIB et au moins un additif choisi parmi la 2-acétylbutyrolactone, l'acide 2-(2-hydroxyéthyl)-3-oxobutanoïque et/ou l'acide 3-hydroxy-2-(2-hydroxyéthyl)-2-butenoïque.

Le catalyseur selon l'invention peut être un catalyseur frais, c'est-à-dire un catalyseur qui n'a pas été utilisé comme catalyseur auparavant dans une unité catalytique et notamment en hydrotraitement et/ou hydrocraquage.

Le catalyseur selon l'invention peut aussi être un catalyseur réjuvéné. On entend par un catalyseur réjuvéné un catalyseur qui a été utilisé en tant que catalyseur dans une unité catalytique et notamment en hydrotraitement et/ou hydrocraquage et qui a été soumis à au moins une étape de calcination afin de brûler le coke (régénération). Ce catalyseur régénéré est ensuite additivé au moins par un additif choisi parmi la 2-acétylbutyrolactone et/ou ses produits d'hydrolyse pour obtenir le catalyseur réjuvéné. Ce catalyseur réjuvéné peut contenir un ou plusieurs autre(s) additif(s) organique(s) qui peuvent être ajoutés avant, après ou en même temps que le ou les additifs choisi(s) parmi la 2-acétylbutyrolactone et/ou ses produits d'hydrolyse.

La fonction hydrogénante dudit catalyseur, aussi appelée phase active, est assurée par au moins un élément du groupe VIB et par au moins un élément du groupe VIII.

Les éléments du groupe VIB préférés sont le molybdène et le tungstène. Les éléments du groupe VIII préférés sont des éléments non nobles et en particulier le cobalt et le nickel. Avantageusement, la fonction hydrogénante est choisie dans le groupe formé par les combinaisons des éléments cobalt-molybdène, nickel-molybdène, nickel-tungstène ou nickel-cobalt-molybdène, ou nickel-molybdène-tungstène.

Dans le cas où une activité importante en hydrodésulfuration, ou en hydrodéazotation et en hydrogénation des aromatiques est souhaitée, la fonction hydrogénante est avantageusement assurée par l'association de nickel et de molybdène; une association de nickel et de tungstène en présence de molybdène peut également être avantageuse. Dans le cas des charges de type distillats sous vide ou plus lourdes, des combinaisons de type cobalt-nickel-molybdène peuvent être avantageusement utilisées.

La teneur totale en éléments du groupe VIB et du groupe VIII est avantageusement supérieure à 6 % poids exprimé en oxyde par rapport au poids total du catalyseur.

La teneur en élément du groupe VIB est comprise entre 5 et 40 % poids, de préférence entre 8 et 35 % poids, et de manière plus préférée entre 10 et 30 % poids exprimé en oxyde de métal du groupe VIB par rapport au poids total du catalyseur.

La teneur en élément du groupe VIII est comprise entre 1 et 10 % poids, de préférence entre 1,5 et 9 % poids, et de manière plus préférée entre 2 et 8 % poids exprimé en oxyde de métal du groupe VIII par rapport au poids total du catalyseur. Le rapport molaire élément du groupe VIII sur élément du groupe VIB dans le catalyseur est préférentiellement compris entre 0,1 et 0,8, de préférence compris entre 0,15 et 0,6 et de manière encore plus préférée compris entre 0,2 et 0,5.

Le catalyseur selon l'invention comprend avantageusement également du phosphore en tant que dopant. Le dopant est un élément ajouté qui en lui-même ne présente aucun caractère catalytique mais qui accroit l'activité catalytique de la phase active.

La teneur en phosphore dans ledit catalyseur est de préférence comprise entre 0,1 et 20 % poids exprimé en P₂O₅, de préférence entre 0,2 et 15 % poids exprimé en P₂O₅, et de manière très préférée entre 0,3 et 11 % poids exprimé en P₂O₅.

Le rapport molaire phosphore sur l'élément du groupe VIB dans le catalyseur est supérieur ou égal à 0,05, de préférence supérieur ou égal à 0,07, de préférence compris entre 0,08 et 1, de préférence compris entre 0,1 et 0,9 et de manière très préférée compris entre 0,15 et 0,8.

Le catalyseur selon l'invention peut avantageusement contenir en outre au moins un dopant choisi parmi le bore, le fluor et un mélange de bore et de fluor.

Lorsque le catalyseur contient du bore, la teneur en bore est de préférence comprise entre 0,1 et 10 % poids exprimé en oxyde de bore, de préférence entre 0,2 et 7 % poids, et de manière très préférée comprise entre 0,2 et 5 % poids.

Lorsque le catalyseur contient du fluor, la teneur en fluor est de préférence comprise entre 0,1 et 10 % poids exprimé en fluor, de préférence entre 0,2 et 7 % poids, et de manière très préférée comprise entre 0,2 et 5 % poids.

Lorsque le catalyseur contient du bore et du fluor, la teneur totale en bore et en fluor est de préférence comprise entre 0,1 et 10 % poids exprimé en oxyde de bore et en fluor, de préférence entre 0,2 et 7 % poids, et de manière très préférée comprise entre 0,2 et 5 % poids.

Le catalyseur selon l'invention comprend un support à base d'alumine ou de silice ou de silice-alumine.

Lorsque le support dudit catalyseur est à base d'alumine, il contient plus de 50 % d'alumine et, de façon générale, il contient uniquement de l'alumine ou de la silice-alumine telle que définie ci-dessous.

De préférence, le support comprend de l'alumine, et de préférence de l'alumine extrudée. De préférence, l'alumine est l'alumine gamma.

Le support d'alumine présente avantageusement un volume poreux total compris entre 0,1 et 1,5 cm³.g⁻¹, de préférence entre 0,4 et 1,1 cm³.g⁻¹. Le volume poreux total est mesuré par porosimétrie au mercure selon la norme ASTM D4284 avec un angle de mouillage de 140°, telle que décrite dans l'ouvrage Rouquerol F.; Rouquerol J.; Singh K. « Adsorption by Powders & Porous Solids: Principle, methodology and applications », Academic Press, 1999, par exemple au moyen d'un appareil modèle Autopore III™ de la marque Microméritics™.

La surface spécifique du support d'alumine est avantageusement comprise entre 5 et 400 m².g⁻¹, de préférence entre 10 et 350 m².g⁻¹, de manière plus préférée entre 40 et 350 m².g⁻¹. La surface spécifique est déterminée dans la présente invention par la méthode B.E.T selon la norme ASTM D3663, méthode décrite dans le même ouvrage cité ci-dessus.

Dans un autre cas préféré, le support dudit catalyseur est une silice-alumine contenant au moins 50 % poids d'alumine. La teneur en silice dans le support est d'au plus 50% poids, le plus souvent inférieure ou égale à 45% poids, de préférence inférieure ou égale à 40% poids.

Les sources de silicium sont bien connues de l'homme du métier. On peut citer à titre d'exemple l'acide silicique, la silice sous forme de poudre ou sous forme colloïdale (sol de silice), le tétraéthylorthosilicate Si(OEt)₄.

Lorsque le support dudit catalyseur_est à base de silice, il contient plus de 50 % poids de silice et, de façon générale, il contient uniquement de la silice.

Selon une variante particulièrement préférée, le support est constitué d'alumine, de silice ou de silice-alumine.

Le support peut aussi avantageusement contenir en outre de 0,1 à 50% poids de zéolithe. Dans ce cas, toutes les sources de zéolithe et toutes les méthodes de préparations associées connues de l'Homme du métier peuvent être incorporées. De préférence, la zéolithe est choisie parmi le groupe FAU, BEA, ISV, IWR, IWW, MEI, UWY et de manière préférée, la zéolithe est choisie parmi le groupe FAU et BEA, telle que la zéolite Y et/ou bêta.

Dans certains cas particulier, le support peut contenir aussi au moins une partie de(s) métal (métaux) VIB et VIII, et/ou au moins une partie de(s) dopant(s) dont le phosphore et/ou au moins une partie de(s) composé(s) organique(s) contenant de l'oxygène (au moins un additif choisi parmi la 2-acétylbutyrolactone et/ou ses produits d'hydrolyse ou un autre additif contenant de l'oxygène) et/ou de l'azote et/ou du soufre qui ont été introduits en-dehors des imprégnations (introduits par exemple lors de la préparation du support).

Le support se présente avantageusement sous forme de billes, d'extrudés, de pastilles, ou d'agglomérats irréguliers et non sphériques dont la forme spécifique peut résulter d'une étape de concassage.

Le catalyseur selon l'invention comprend également au moins un additif choisi parmi la 2-acétylbutyrolactone et/ou ses produits d'hydrolyse, l'acide 2-(2-hydroxyéthyl)-3-oxobutanoïque et l'acide 3-hydroxy-2-(2-hydroxyéthyl)-2-butenoïque. La 2-acétylbutyrolactone, l'acide 2-(2-hydroxyéthyl)-3-oxobutanoïque et l'acide 3-hydroxy-2-(2-hydroxyéthyl)-2-butenoïque répondent respectivement aux formules suivantes (a) et (b) et (c) décrites ci-après :

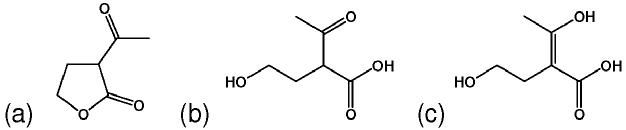

La présence d'au moins un additif choisi parmi la 2-acétylbutyrolactone et/ou ses produits d'hydrolyse sur le catalyseur permet d'observer une activité augmentée par rapport aux catalyseurs non additivés et aux catalyseurs séchés additivés connus. Sans être lié par une quelconque théorie, on notera que l'acide 2-(2-hydroxyéthyl)-3-oxobutanoïque et l'acide 3-hydroxy-2-(2-hydroxyéthyl)-2-butenoïque peuvent être obtenus directement ou indirectement par hydrolyse de la 2-acétylbutyrolactone.

Selon une variante, la présence d'au moins un additif choisi parmi la 2-acétylbutyrolactone, l'acide 2-(2-hydroxyéthyl)-3-oxobutanoïque et l'acide 3-hydroxy-2-(2-hydroxyéthyl)-2-butenoïque sur le catalyseur peut être due à l'ajout en tant que tel du ou des additif(s), seuls ou en mélange.

Selon une autre variante, la présence de l'additif acide 2-(2-hydroxyéthyl)-3-oxobutanoïque et/ou acide 3-hydroxy-2-(2-hydroxyéthyl)-2-butenoïque sur le catalyseur peut être due à l'hydrolyse de la 2-acétylbutyrolactone contenue dans la solution d'imprégnation ajoutée audit précurseur catalytique ou support et éventuellement à une étape consécutive de déshydratation.

La teneur totale en additif(s) choisi(s) parmi la 2-acétylbutyrolactone et/ou ses produits d'hydrolyse sur le catalyseur selon l'invention est comprise entre 1 et 45 % poids, de préférence entre 2 et 30 % poids, et de manière plus préférée entre 3 et 25 % poids par rapport au poids total du catalyseur. Lors de la préparation du catalyseur, la ou les étapes de séchage consécutive(s) à l'introduction du ou des additif(s) est (sont) réalisée(s) à une température inférieure à 200°C de manière à conserver de préférence au moins 30 %, de préférence au moins 50 %, et de manière très préférée au moins 70 % de la quantité d'additif(s) introduit(s) calculée sur la base du carbone restant sur le catalyseur.

Le catalyseur selon l'invention peut comprendre en plus du ou des additif(s) choisi(s) parmi la 2-acétylbutyrolactone et/ou ses produits d'hydrolyse un autre composé organique ou un groupe de composés organiques connus pour leur rôle d'additifs. La fonction des additifs est d'augmenter l'activité catalytique par rapport aux catalyseurs non additivés.

Par la suite dans le texte, on entendra par « lesdits additifs » au moins un additif choisi parmi la 2-acétylbutyrolactone et/ou ses produits d'hydrolyse.

Plus particulièrement, le catalyseur selon l'invention peut en outre comprendre un ou plusieurs composés organiques contenant de l'oxygène autres que lesdits additifs et/ou un ou plusieurs composés organiques contenant de l'azote et/ou un ou plusieurs composés organiques contenant du soufre. De préférence, le catalyseur selon l'invention peut en outre comprendre un ou plusieurs composés organiques contenant de l'oxygène autres que lesdits additifs, et/ou un ou plusieurs composés organiques contenant de l'azote. De préférence, le composé organique contient au moins 2 atomes de carbone et au moins un atome d'oxygène et/ou d'azote.

Généralement, le composé organique est choisi parmi un composé comportant une ou plusieurs fonctions chimiques choisies parmi une fonction carboxylique, alcool, thiol, thioéther, sulfone, sulfoxyde, éther, aldéhyde, cétone, ester, carbonate, amine, nitrile, imide, oxime, urée et amide. De préférence, le composé organique est choisi parmi un composé comportant deux fonctions alcools et/ou deux fonctions carboxyliques et/ou deux fonctions esters et/ou au moins une fonction amide.

Le composé organique contenant de l'oxygène peut être l'un ou plusieurs choisis parmi les composés comportant une ou plusieurs fonctions chimiques choisies parmi une fonction carboxylique, alcool, éther, aldéhyde, cétone, ester ou carbonate. A titre d'exemple, le composé organique contenant de l'oxygène peut être l'un ou plusieurs choisis dans le groupe constitué par l'éthylèneglycol, le diéthylèneglycol, le triéthylèneglycol, un polyéthylèneglycol (avec un poids moléculaire compris entre 200 et 1500 g/mol), le propylèneglycol, le 2-butoxyéthanol, 2-(2-butoxyéthoxy)éthanol, 2-(2-méthoxyéthoxy)éthanol, le triéthylèneglycoldiméthyléther, le glycérol, l'acétophénone, la 2,4-pentanedione, la pentanone, l'acide acétique, l'acide maléique, l'acide malique, l'acide malonique, l'acide malique, l'acide oxalique, l'acide gluconique, l'acide tartrique, l'acide citrique, un succinate de dialkyle C1-C4, l'acétoacétate de méthyle, l'acétoacétate d'éthyle, le dibenzofurane, un éther couronne, l'acide orthophtalique, le glucose et le carbonate de propylène.

Le composé organique contenant de l'azote peut être l'un ou plusieurs choisis parmi les composés comportant une ou plusieurs fonctions chimiques choisies parmi une fonction amine ou nitrile. A titre d'exemple, le composé organique contenant de l'azote peut être l'un ou plusieurs choisis dans le groupe constitué par l'éthylènediamine, la diéthylènetriamine, l'hexaméthylènediamine, la triéthylènetétramine, la tétraéthylènepentamine, la pentaéthylènehexamine, l'acétonitrile, l'octylamine, la guanidine ou un carbazole.

Le composé organique contenant de l'oxygène et de l'azote peut être l'un ou plusieurs choisis parmi les composés comportant une ou plusieurs fonctions chimiques choisies parmi une fonction acide carboxylique, alcool, éther, aldéhyde, cétone, ester, carbonate, amine, nitrile, imide, amide, urée ou oxime. A titre d'exemple, le composé organique contenant de l'oxygène et de l'azote peut être l'un ou plusieurs choisis dans le groupe constitué par l'acide 1,2-cyclohexanediaminetétraacétique, la monoéthanolamine (MEA), la N-méthylpyrrolidone, le diméthylformamide, l'acide éthylènediaminetétraacétique (EDTA), l'alanine, la glycine, l'acide nitrilotriacétique (NTA), l'acide N-(2-hydroxyéthyl)éthylènediamine-N,N',N'-triacétique (HEDTA), l'acide diéthylènetriaminepentaacétique (DTPA), la tétraméthylurée, l'acide glutamique, le diméthylglyoxime, la bicine ou la tricine, ou encore un lactame.

Le composé organique contenant du soufre peut être l'un ou plusieurs choisis parmi les composés comportant une ou plusieurs fonctions chimiques choisies parmi une fonction thiol, thioéther, sulfone ou sulfoxyde. A titre d'exemple, le composé organique contenant du soufre peut être l'un ou plusieurs choisis dans le groupe constitué par l'acide thioglycolique, l'acide 2-hydroxy-4-méthylthiobutanoïque, un dérivé sulfoné d'un benzothiophène ou un dérivé sulfoxydé d'un benzothiophène.

De préférence, le composé organique contient de l'oxygène, de manière préférée il est choisi parmi le triéthylèneglycol, le diéthylèneglycol, l'éthylèneglycol, l'acide éthylènediaminetétraacétique (EDTA), l'acide maléique, l'acide malonique, l'acide citrique, le diméthylformamide, la N-méthylpyrrolidone, le carbonate de propylène, la bicine, ou la tricine.

Lorsqu'il(s) est/sont présent, la teneur totale en composé(s) organique(s) à fonction additif(s) (autre que lesdits additifs) contenant de l'oxygène et/ou de l'azote et/ou du soufre sur le catalyseur selon l'invention est comprise entre 1 et 30 % poids, de préférence entre 1,5 et 25% poids, et de manière plus préférée entre 2 et 20 % poids par rapport au poids total du catalyseur.

### Procédé de préparation

Le catalyseur selon l'invention peut être préparé selon un procédé de préparation comprenant les étapes suivantes :
c) on met en contact au moins un composant d'un élément du groupe VIB, au moins un composant d'un élément du groupe VIII, au moins un additif choisi parmi la 2-acétylbutyrolactone et/ou ses produits d'hydrolyse et éventuellement du phosphore avec un support à base d'alumine ou de silice ou de silice-alumine, ou on met en contact un catalyseur régénéré contenant un support à base d'alumine ou de silice ou de silice-alumine, au moins un composant d'un élément du groupe VIB, au moins un composant d'un élément du groupe VIII et éventuellement du phosphore avec au moins un additif choisi parmi la 2-acétylbutyrolactone et/ou ses produits d'hydrolyse, de manière à obtenir un précurseur de catalyseur,
d) on sèche ledit précurseur de catalyseur issu de l'étape a) à une température inférieure à 200°C, sans le calciner ultérieurement.

On décrira d'abord le procédé de préparation d'un catalyseur frais, puis par la suite le procédé de préparation d'un catalyseur réjuvéné.

### Procédé de préparation d'un catalyseur frais

L'étape a) de mise en contact comporte plusieurs modes de mise en œuvre qui se distinguent notamment par le moment de l'introduction de l'additif choisi parmi la 2-acétylbutyrolactone et/ou ses produits d'hydrolyse qui peut être effectuée soit en même temps que l'imprégnation des métaux (co-imprégnation), soit après l'imprégnation des métaux (post-imprégnation), ou enfin avant l'imprégnation des métaux (pré-imprégnation). De plus, l'étape de mise en contact peut combiner au moins deux modes de mise en œuvre, par exemple la co-imprégnation et la post-imprégnation. Ces différents modes de mise en œuvre seront décrits par la suite. Chaque mode, pris seul ou en combinaison, peut se dérouler en une ou plusieurs étapes.

Il est important de souligner que le catalyseur selon l'invention lors de son procédé de préparation ne subit pas de calcination après l'introduction du ou des additifs choisi(s) parmi la 2-acétylbutyrolactone et/ou ses produits d'hydrolyse ou de tout autre composé organique contenant de l'oxygène et/ou de l'azote et/ou du soufre afin de préserver au moins en partie du ou des additifs choisi(s) parmi la 2-acétylbutyrolactone et/ou ses produits d'hydrolyse ou tout autre composé organique dans le catalyseur. On entend ici par calcination un traitement thermique sous un gaz contenant de l'air ou de l'oxygène à une température supérieure ou égale à 200°C.

Cependant, le précurseur de catalyseur peut subir une étape de calcination avant l'introduction d'au moins un additif choisi parmi la 2-acétylbutyrolactone et/ou ses produits d'hydrolyse ou de tout autre composé organique contenant de l'oxygène et/ou de l'azote et/ou du soufre, notamment après l'imprégnation des éléments du groupe VIB et VIII (post-imprégnation) éventuellement en présence du phosphore et/ou d'un autre dopant ou lors d'une régénération d'un catalyseur déjà utilisé. La fonction hydrogénante comprenant les éléments du groupe VIB et du groupe VIII du catalyseur selon l'invention, aussi appelée phase active, se trouve alors sous une forme oxyde.

Selon une autre variante, le précurseur de catalyseur ne subit pas d'étape de calcination après l'imprégnation des éléments du groupe VIB et VIII (post-imprégnation), il est simplement séché. La fonction hydrogénante comprenant les éléments du groupe VIB et du groupe VIII du catalyseur selon l'invention, aussi appelée phase active, ne se trouve alors pas sous une forme oxyde.

Quel que soit le mode de mise en œuvre, l'étape a) de mise en contact comporte généralement au moins une étape d'imprégnation, de préférence une étape d'imprégnation à sec, dans laquelle on imprègne le support par une solution d'imprégnation comprenant au moins un élément du groupe VIB, au moins un élément du groupe VIII, et éventuellement du phosphore. Dans le cas de la co-imprégnation décrite ci-dessous en détail, cette solution d'imprégnation comprend en outre au moins un additif choisi parmi la 2-acétylbutyrolactone et/ou ses produits d'hydrolyse. Les éléments du groupe VIB et du groupe VIII sont généralement introduits par imprégnation, préférentiellement par imprégnation à sec ou par imprégnation en excès de solution. De préférence, la totalité des éléments du groupe VIB et du groupe VIII est introduite par imprégnation, de préférence par imprégnation à sec et ceci quel que soit le mode de mise en œuvre.

Les éléments du groupe VIB et du groupe VIII peuvent également être introduits en partie lors de la mise en forme dudit support au moment du malaxage avec au moins un gel d'alumine choisi comme matrice, le reste des éléments hydrogénants étant alors introduit ultérieurement par imprégnation. De manière préférée, lorsque les éléments du groupe VIB et du groupe VIII sont introduits pour partie au moment du malaxage, la proportion d'élément du groupe VIB introduite au cours de cette étape est inférieure à 5 % poids de la quantité totale d'élément du groupe VIB introduite sur le catalyseur final.

De manière préférée, l'élément du groupe VIB est introduit en même temps que l'élément du groupe VIII, quel que soit le mode d'introduction.

Les précurseurs de molybdène qui peuvent être utilisés sont bien connus de l'homme du métier. Par exemple, parmi les sources de molybdène, on peut utiliser les oxydes et hydroxydes, les acides molybdiques et leurs sels en particulier les sels d'ammonium tels que le molybdate d'ammonium, l'heptamolybdate d'ammonium, l'acide phosphomolybdique (H₃PMo₁₂O₄₀) et leurs sels, et éventuellement l'acide silicomolybdique (H₄SiMo₁₂O₄₀) et ses sels. Les sources de molybdène peuvent également être des hétéropolycomposés de type Keggin, Keggin lacunaire, Keggin substitué, Dawson, Anderson, Strandberg, par exemple. On utilise de préférence le trioxyde de molybdène et les hétéropolyanions de type Strandberg, Keggin, Keggin lacunaire ou Keggin substitué.

Les précurseurs de tungstène qui peuvent être utilisés sont également bien connus de l'homme du métier. Par exemple, parmi les sources de tungstène, on peut utiliser les oxydes et hydroxydes, les acides tungstiques et leurs sels en particulier les sels d'ammonium tels que le tungstate d'ammonium, le métatungstate d'ammonium, l'acide phosphotungstique et leurs sels, et éventuellement l'acide silicotungstique (H₄SiW₁₂O₄₀) et ses sels. Les sources de tungstène peuvent également être des hétéropolycomposés de type Keggin, Keggin lacunaire, Keggin substitué, Dawson, par exemple. On utilise de préférence les oxydes et les sels d'ammonium tel que le métatungstate d'ammonium ou les hétéropolyanions de type Keggin, Keggin lacunaire ou Keggin substitué.

Les précurseurs des éléments du groupe VIII qui peuvent être utilisées sont avantageusement choisis parmi les oxydes, les hydroxydes, les hydroxycarbonates, les carbonates et les nitrates des éléments du groupe VIII, par exemple, l'hydroxycarbonate de nickel, le carbonate ou l'hydroxyde de cobalt sont utilisés de manière préférée.

Le phosphore, lorsqu'il est présent, peut être introduit en totalité ou en partie par imprégnation. De préférence, il est introduit par une imprégnation, de préférence à sec, à l'aide d'une solution contenant les précurseurs des éléments du groupe VIB et du groupe VIII.

Ledit phosphore peut être avantageusement introduit seul ou en mélange avec l'un au moins des éléments du groupe VIB et du groupe VIII, et ce au cours de n'importe laquelle des étapes d'imprégnation de la fonction hydrogénante si celle-ci est introduite en plusieurs fois. Ledit phosphore peut aussi être introduit, tout ou partie, lors de l'imprégnation d'au moins un additif choisi parmi la 2-acétylbutyrolactone et/ou ses produits d'hydrolyse si celui-ci est introduit séparément de la fonction hydrogénante (cas de la post- et pré-imprégnation décrites ultérieurement) et ceci en présence ou absence d'un composé organique contenant de l'oxygène et/ou de l'azote et/ou du soufre autre que lesdits additifs. Il peut également être introduit dès la synthèse du support, à n'importe quelle étape de la synthèse de celui-ci. Il peut ainsi être introduit avant, pendant ou après le malaxage de la matrice gel d'alumine choisie, telle que par exemple et de préférence l'oxyhydroxyde d'aluminium (boehmite) précurseur de l'alumine.

Le précurseur de phosphore préféré est l'acide orthophosphorique H₃PO₄, mais ses sels et esters comme les phosphates d'ammonium conviennent également. Le phosphore peut également être introduit en même temps que le(s) élément(s) du groupe VIB sous la forme d'hétéropolyanions de Keggin, Keggin lacunaire, Keggin substitué ou de type Strandberg.

Le ou les additifs choisi parmi la 2-acétylbutyrolactone et/ou ses produits d'hydrolyse est/sont avantageusement introduit(s) dans une solution d'imprégnation qui, selon le mode de préparation, peut être la même solution ou une solution différente de celle contenant les éléments du groupe VIB et VIII, dans une quantité totale correspondant :
- à un rapport molaire total du ou des additif(s) choisi(s) parmi la 2-acétylbutyrolactone et/ou ses produits d'hydrolyse par élément(s) du groupe VIB du précurseur de catalyseur compris entre 0,01 à 5 mol/mol, de préférence compris entre 0,05 à 3 mol/mol, de manière préférée compris entre 0,1 et 1,5 mol/mol et de manière très préférée, compris entre 0,2 et 1 mol/mol, calculé sur la base des composants introduits dans la ou les solution(s) d'imprégnation, et
- à un rapport molaire total du ou des additif(s) choisi(s) parmi la 2-acétylbutyrolactone et/ou ses produits d'hydrolyse par élément(s) du groupe VIII du précurseur de catalyseur compris entre 0,02 à 17 mol/mol, de préférence compris entre 0,1 à 10 mol/mol, de manière préférée compris entre 0,2 et 5 mol/mol et de manière très préférée, compris entre 0,4 et 3,5 mol/mol, calculé sur la base des composants introduits dans la ou les solution(s) d'imprégnation.

Toute solution d'imprégnation décrite dans la présente invention peut comprendre tout solvant polaire connu de l'homme du métier. Ledit solvant polaire utilisé est avantageusement choisi dans le groupe formé par le méthanol, l'éthanol, l'eau, le phénol, le cyclohexanol, pris seuls ou en mélange. Ledit solvant polaire peut également être avantageusement choisi dans le groupe formé par le carbonate de propylène, le DMSO (diméthylsulfoxyde), la N-méthylpyrrolidone (NMP) ou le sulfolane, pris seul ou en mélange. De manière préférée, on utilise un solvant protique polaire. Une liste des solvants polaires usuels ainsi que leur constante diélectrique peut être trouvée dans le livre « Solvents and Solvent Effects in Organic Chemistry » C. Reichardt, Wiley-VCH, 3eme édition, 2003, pages 472-474. De manière très préférée, le solvant utilisé est l'eau ou l'éthanol, et de manière particulièrement préférée, le solvant est l'eau. Dans un mode de réalisation possible, le solvant peut être absent dans la solution d'imprégnation, notamment lors d'une préparation en pré- ou post-imprégnation.

Lorsque le catalyseur comprend en outre un dopant choisi parmi le bore, le fluor ou un mélange de bore et de fluor, l'introduction de ce(s) dopant(s) peut se faire de la même manière que l'introduction du phosphore à diverses étapes de la préparation et de diverses manières. Ledit dopant peut être avantageusement introduit seul ou en mélange avec l'un au moins des éléments du groupe VIB et du groupe VIII, et ce au cours de n'importe laquelle des étapes d'imprégnation de la fonction hydrogénante si celle-ci est introduite en plusieurs fois. Ledit dopant peut aussi être introduit, tout ou partie, lors de l'imprégnation d'au moins un additif choisi parmi la 2-acétylbutyrolactone et/ou ses produits d'hydrolyse si celui-ci est introduit séparément de la fonction hydrogénante (cas de la post- et pré-imprégnation décrites ultérieurement) et ceci en présence ou absence d'un composé organique contenant de l'oxygène et/ou de l'azote et/ou du soufre autre que lesdits additifs. Il peut également être introduit dès la synthèse du support, à n'importe quelle étape de la synthèse de celui-ci. Il peut ainsi être introduit avant, pendant ou après le malaxage de la matrice gel d'alumine choisie, telle que par exemple et de préférence l'oxyhydroxyde d'aluminium (boehmite) précurseur de l'alumine.

Ledit dopant, lorsqu'il y en a un, est avantageusement introduit en mélange avec le(s) précurseur(s) des éléments du groupe VIB et du groupe VIII, en totalité ou en partie sur le support mis en forme par une imprégnation à sec dudit support à l'aide d'une solution, de préférence aqueuse, contenant les précurseurs des métaux, le précurseur de phosphore et le(s) précurseur(s) du (des) dopant(s), (et contenant également au moins un additif choisi parmi la 2-acétylbutyrolactone et/ou ses produits d'hydrolyse dans le mode de la co-imprégnation).

Les précurseurs de bore peut être l'acide borique, l'acide orthoborique H₃BO₃, le biborate ou le pentaborate d'ammonium, l'oxyde de bore, les esters boriques. Le bore peut être introduit par exemple par une solution d'acide borique dans un mélange eau/alcool ou encore dans un mélange eau/ethanolamine. De préférence le précurseur de bore, si du bore est introduit, est l'acide orthoborique.

Les précurseurs de fluor qui peuvent être utilisés sont bien connus de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Le fluor peut être introduit par exemple par imprégnation d'une solution aqueuse d'acide fluorhydrique, ou de fluorure d'ammonium ou encore de bifluorure d'ammonium.

Lorsque le catalyseur comprend en outre un additif supplémentaire (en plus du ou des additif(s) choisi(s) parmi la 2-acétylbutyrolactone et/ou ses produits d'hydrolyse) ou un groupe d'additifs supplémentaires choisi parmi un composé organique contenant de l'oxygène et/ou de l'azote et/ou du soufre autre que lesdits additifs, celui-ci peut être introduit dans la solution d'imprégnation de l'étape a).

Le rapport molaire total de composé(s) organique(s) contenant de l'oxygène et/ou de l'azote et/ou du soufre autre que lesdits additifs par élément(s) du groupe VIB sur le catalyseur est compris entre 0,05 à 5 mol/mol, de préférence compris entre 0,1 à 4 mol/mol, de manière préférée compris entre 0,2 et 3 mol/mol, calculé sur la base des composants introduits dans la ou les solution(s) d'imprégnation.

Le rapport molaire total de composé(s) organique(s) contenant de l'oxygène et/ou de l'azote et/ou du soufre autre que lesdits additifs par rapport à la somme de la 2-acétylbutyrolactone et/ou ses produits d'hydrolyse, est compris entre 0,05 et 6 mol/mol, de préférence compris entre 0,1 et 5 mol/mol, de manière préférée compris entre 0,2 et 4 mol/mol, calculé sur la base des composants introduits dans la ou les solution(s) d'imprégnation.

Avantageusement, après chaque étape d'imprégnation, on laisse maturer le support imprégné. La maturation permet à la solution d'imprégnation de se disperser de manière homogène au sein du support.

Toute étape de maturation décrite dans la présente invention est avantageusement réalisée à pression atmosphérique, dans une atmosphère saturée en eau et à une température comprise entre 17°C et 50°C, et de préférence à température ambiante. Généralement une durée de maturation comprise entre dix minutes et quarante-huit heures et de préférence comprise entre trente minutes et cinq heures, est suffisante. Des durées plus longues ne sont pas exclues, mais n'apportent pas nécessairement d'amélioration.

Conformément à l'étape b) du procédé de préparation selon l'invention, le précurseur de catalyseur obtenu à l'étape a) éventuellement maturé est soumis à une étape de séchage à une température inférieure à 200°C sans étape de calcination ultérieure.

Toute étape de séchage postérieure à l'introduction desdits additifs décrite dans la présente invention est effectuée à une température inférieure à 200°C, de préférence comprise entre 50 et 180°C, de manière préférée entre 70 et 150°C et de manière très préférée entre 75 et 130°C.

L'étape de séchage est avantageusement effectuée par toute technique connue de l'Homme du métier. Elle est avantageusement effectuée à pression atmosphérique ou à pression réduite. De manière préférée cette étape est réalisée à pression atmosphérique. Elle est avantageusement effectuée en lit traversé en utilisant de l'air ou tout autre gaz chaud. De manière préférée, lorsque le séchage est effectué en lit fixe, le gaz utilisé est soit l'air, soit un gaz inerte comme l'argon ou l'azote. De manière très préférée le séchage est réalisé en lit traversé en présence d'azote et/ou d'air. De préférence, l'étape de séchage a une durée courte comprise entre 5 minutes et 4 heures, de préférence entre 30 minutes et 4 heures et de manière très préférée entre 1 heure et 3 heures. Le séchage est alors conduit de manière à préférentiellement conserver au moins 30 % du ou des additif(s) choisi(s) parmi la 2-acétylbutyrolactone et/ou ses produits d'hydrolyse introduit(s) lors d'une étape d'imprégnation, de préférence cette quantité est supérieure à 50% et de manière encore plus préférée, supérieure à 70%, calculée sur la base du carbone restant sur le catalyseur. Lorsqu'un composé organique contenant de l'oxygène et/ou de l'azote et/ou du soufre autre que lesdits additifs est présent, l'étape de séchage est réalisée de manière à conserver de préférence au moins 30 %, de préférence au moins 50 %, et de manière très préférée au moins 70 % de la quantité introduite calculée sur la base du carbone restant sur le catalyseur.

A l'issue de l'étape de séchage b), on obtient un catalyseur séché, qui n'est soumis à aucune étape de calcination ultérieure.

### Co-imprégnation

Selon un premier mode de mise en œuvre de l'étape a) du procédé de préparation du catalyseur (frais), on procède au dépôt desdits composants des éléments du groupe VIB, du groupe VIII, d'au moins un additif choisi parmi la 2-acétylbutyrolactone et/ou ses produits d'hydrolyse et éventuellement du phosphore sur ledit support, par une ou plusieurs étapes de co-imprégnation, c'est-à-dire que lesdits composants des éléments du groupe VIB, du groupe VIII, d'au moins un additif choisi parmi la 2-acétylbutyrolactone et/ou ses produits d'hydrolyse et éventuellement du phosphore sont introduits simultanément dans ledit support (« co-imprégnation »). Selon une variante, l'étape a) est l'étape suivante :
a')on imprègne un support à base d'alumine ou de silice ou de silice-alumine par au moins une solution contenant au moins un élément du groupe VIB, au moins un élément du groupe VIII, au moins un additif choisi parmi la 2-acétylbutyrolactone et/ou ses produits d'hydrolyse et éventuellement du phosphore de manière à obtenir un précurseur de catalyseur.

La ou les étapes de co-imprégnation est (sont) effectuée(s) préférentiellement par imprégnation à sec ou par imprégnation en excès de solution. Lorsque ce premier mode comprend la mise en œuvre de plusieurs étapes de co-imprégnation, chaque étape de co-imprégnation est de préférence suivie d'une étape de séchage intermédiaire à une température inférieure à 200°C, avantageusement comprise entre 50 et 180°C, de préférence entre 70 et 150°C, de manière très préférée entre 75 et 130°C et optionnellement une période de maturation a été observée entre l'imprégnation et le séchage.

De manière très préférée, lors de la préparation via co-imprégnation, les éléments du groupe VIB et du groupe VIII, au moins un additif choisi parmi la 2-acétylbutyrolactone et/ou ses produits d'hydrolyse, éventuellement le phosphore, éventuellement un autre dopant choisi parmi le bore et/ou le fluor et éventuellement un composé organique contenant de l'oxygène et/ou de l'azote et/ou du soufre autre que lesdits additifs sont introduits dans l'étape a) en totalité après la mise en forme dudit support, par une imprégnation à sec dudit support à l'aide d'une solution d'imprégnation aqueuse contenant les précurseurs des éléments du groupe VIB et du groupe VIII, au moins un additif choisi parmi la 2-acétylbutyrolactone et/ou ses produits d'hydrolyse, éventuellement le précurseur de phosphore, éventuellement le précurseur de dopant choisi parmi le bore et/ou le fluor et éventuellement le composé organique contenant de l'oxygène et/ou de l'azote et/ou du soufre autre que lesdits additifs.

### Post-imprégnation

Selon un deuxième mode de mise en œuvre de l'étape a) du procédé de préparation du catalyseur (frais) selon l'invention, on met en contact au moins un additif choisi parmi la 2-acétylbutyrolactone et/ou ses produits d'hydrolyse avec un support imprégné séché et optionnellement calciné comprenant au moins un composant d'un élément du groupe VIB, au moins un composant d'un élément du groupe VIII et éventuellement du phosphore, ledit support étant à base d'alumine ou de silice ou de silice-alumine, de manière à obtenir un précurseur de catalyseur.

Ce deuxième mode de mise en œuvre est une préparation par « post-imprégnation » d'au moins un additif choisi parmi la 2-acétylbutyrolactone et/ou ses produits d'hydrolyse. Celle-ci est réalisée par exemple par imprégnation à sec.

Selon ce second mode de mise en œuvre, la mise en contact selon l'étape a) comprend les étapes successives suivantes qui vont être détaillées par la suite :
a1) on imprègne un support à base d'alumine ou de silice ou de silice-alumine par au moins une solution contenant au moins un élément du groupe VIB, au moins un élément du groupe VIII et éventuellement du phosphore pour obtenir un support imprégné,
a2) on sèche le support imprégné obtenu à l'étape a1) à une température inférieure à 200°C pour obtenir un support imprégné séché, et optionnellement on calcine le support imprégné séché pour obtenir un support imprégné calciné,
a3) on imprègne le support imprégné séché et éventuellement calciné obtenu à l'étape a2) par une solution d'imprégnation comprenant au moins un additif choisi parmi la 2-acétylbutyrolactone et/ou ses produits d'hydrolyse de manière à obtenir un précurseur de catalyseur,
a4) optionnellement, on laisse maturer le précurseur de catalyseur obtenu à l'étape a3).

Dans l'étape a1) de la mise en œuvre par post-imprégnation, l'introduction des éléments du groupe VIB et du groupe VIII et éventuellement du phosphore sur le support peut être avantageusement effectuée par une ou plusieurs imprégnations en excès de solution sur le support, ou de préférence par une ou plusieurs imprégnation à sec, et, de manière préférée, par une seule imprégnation à sec dudit support, à l'aide de solution(s), de préférence aqueuse(s), contenant le ou les précurseurs de métaux et de préférence le précurseur de phosphore.

Lorsqu'on effectue plusieurs étapes d'imprégnation, chaque étape d'imprégnation est de préférence suivie d'une étape de séchage intermédiaire à une température inférieure à 200°C, avantageusement comprise entre 50 et 180°C, de préférence entre 70 et 150°C, de manière très préférée entre 75 et 130°C et optionnellement une période de maturation a été observée entre l'imprégnation et le séchage. Chaque étape de séchage intermédiaire, préalable à l'introduction d'au moins un additif choisi parmi la 2-acétylbutyrolactone et/ou ses produits d'hydrolyse peut être suivie d'une étape de calcination dans les conditions décrites ci-dessous pour l'étape a2).

De manière très préférée, lors de la préparation via post-imprégnation, les éléments du groupe VIB et du groupe VIII et éventuellement le phosphore, éventuellement un autre dopant choisi parmi le bore et/ou le fluor et éventuellement un composé organique contenant de l'oxygène et/ou de l'azote et/ou du soufre autre que lesdits additifs sont introduits dans l'étape a1) en totalité après la mise en forme dudit support, par une imprégnation à sec dudit support à l'aide d'une solution d'imprégnation aqueuse contenant les précurseurs des éléments du groupe VIB et du groupe VIII, le précurseur de phosphore, et éventuellement le précurseur de dopant choisi parmi le bore et/ou le fluor et éventuellement le composé organique contenant de l'oxygène et/ou de l'azote et/ou du soufre autre que lesdits additifs.

Selon une autre variante, les éléments du groupe VIB et du groupe VIII et éventuellement le phosphore, éventuellement un autre dopant choisi parmi le bore et/ou le fluor et éventuellement un composé organique contenant de l'oxygène et/ou de l'azote et/ou du soufre autre que lesdits additifs peuvent être introduits dans l'étape a1) de façon successive par plusieurs solutions d'imprégnation contenant une ou plusieurs des composantes.

Avantageusement, on laisse maturer le support imprégné obtenu à l'étape a1) dans les conditions décrites pour la maturation ci-dessus.

Selon l'étape a2), on sèche le support imprégné obtenu à l'étape a1) à une température inférieure à 200°C pour obtenir un support imprégné séché dans les conditions décrites pour le séchage ci-dessus.

Optionnellement, le support imprégné séché peut subir ensuite une calcination. La calcination est généralement effectuée à une température comprise entre 200°C et 900°C, de préférence comprise entre 250°C et 750°C. La durée de calcination est généralement comprise entre 0,5 heures et 16 heures, de préférence entre 1 heures et 5 heures. Elle s'effectue généralement sous air. La calcination permet de transformer les précurseurs des métaux du groupe VIB et VIII en oxydes.

Selon l'étape a3), on imprègne le support imprégné séché obtenu à l'étape a2) par une solution d'imprégnation comprenant au moins un additif choisi parmi la 2-acétylbutyrolactone et/ou ses produits d'hydrolyse de manière à obtenir un précurseur de catalyseur.

Le ou les additif(s) choisi(s) parmi la 2-acétylbutyrolactone et/ou ses produits d'hydrolyse peut/peuvent avantageusement être déposé(s) en une ou plusieurs étapes soit par imprégnation en excès, soit par imprégnation à sec, soit par tout autre moyen connu de l'homme du métier. De préférence, le ou lesdits additifs est/sont introduit(s) en imprégnation à sec, en présence ou absence d'un solvant tel que décrit ci-dessus.

De préférence, le solvant dans la solution d'imprégnation utilisée à l'étape a3) est l'eau, ce qui facilite la mise en œuvre à l'échelle industrielle.

Le ou les additif(s) choisi(s) parmi la 2-acétylbutyrolactone et/ou ses produits d'hydrolyse est/sont avantageusement introduit(s) dans la solution d'imprégnation de l'étape a3) avec les rapports molaires par élément du groupe VIB ou du groupe VIII décrits ci-dessus.

Lorsqu'on souhaite introduire en outre un additif supplémentaire (en plus du ou des additif(s) choisi(s) parmi la 2-acétylbutyrolactone et/ou ses produits d'hydrolyse) ou un groupe d'additifs supplémentaires choisi parmi un composé organique contenant de l'oxygène et/ou de l'azote et/ou du soufre autre que lesdits additifs, celui-ci peut être introduit dans la solution d'imprégnation de l'étape a1) et/ou dans la solution d'imprégnation de l'étape a3) ou encore par une étape d'imprégnation supplémentaire à n'importe quel moment du procédé de préparation avant le séchage final de l'étape b) étant entendu qu'on n'effectue pas d'étape de calcination après son introduction. Ce composé est introduit dans les proportions décrites ci-dessus.

Selon l'étape a4), on laisse optionnellement maturer le précurseur de catalyseur obtenu à l'étape a3), et ceci dans les conditions de maturation décrites ci-dessus.

Conformément à l'étape b) du procédé de préparation selon l'invention, le précurseur de catalyseur qui a été optionnellement maturé lors de l'étape a4) est soumis à une étape de séchage à une température inférieure à 200°C sans étape de calcination ultérieure, telle que décrite ci-dessus.

### Pré-imprégnation

Selon un troisième mode de mise en œuvre de l'étape a) du procédé de préparation du catalyseur (frais) selon l'invention, on met en contact au moins un composant d'un élément du groupe VIB, au moins un composant d'un élément du groupe VIII, éventuellement du phosphore avec le support à base d'alumine ou de silice ou de silice-alumine qui contient au moins un additif choisi parmi la 2-acétylbutyrolactone et/ou ses produits d'hydrolyse de manière à obtenir un précurseur de catalyseur.

Ce troisième mode de mise en œuvre est une préparation par « pré-imprégnation » d'au moins un additif choisi parmi la 2-acétylbutyrolactone et/ou ses produits d'hydrolyse. Celle-ci est réalisée par exemple par imprégnation à sec.

Selon ce troisième mode de mise en œuvre, la mise en contact selon l'étape a) comprend les étapes successives suivantes qui vont être détaillées par la suite :
a1') on prépare un support comprenant au moins un additif choisi parmi la 2-acétylbutyrolactone et/ou ses produits d'hydrolyse et éventuellement au moins une partie du phosphore,
a2') on imprègne le support obtenu à l'étape a1') par une solution d'imprégnation comprenant au moins un élément du groupe VIB, au moins un élément du groupe VIII et éventuellement du phosphore de manière à obtenir un précurseur de catalyseur,
a3') optionnellement, on laisse maturer le précurseur de catalyseur obtenu à l'étape a2').

Dans l'étape a1') de la mise en œuvre par pré-imprégnation, on prépare un support comprenant au moins au moins un additif choisi parmi la 2-acétylbutyrolactone et/ou ses produits d'hydrolyse et éventuellement au moins une partie du phosphore. Le ou les additif(s) choisi(s) parmi la 2-acétylbutyrolactone et/ou ses produits d'hydrolyse peut/peuvent être introduit(s) à tout moment de la préparation du support, et de manière préférentielle lors de la mise en forme ou par imprégnation sur un support déjà formé.

Si l'on choisit l'introduction d'au moins un additif choisi parmi la 2-acétylbutyrolactone et/ou ses produits d'hydrolyse sur le support préalablement mis en forme, alors celle-ci peut être effectuée telle que cela est indiqué pour l'étape a3) de la post-imprégnation. Elle sera alors suivie d'une optionnelle étape de maturation et d'un séchage à une température inférieure à 200 °C dans les conditions de maturation et de séchage telles que décrites ci-dessus.

Si l'on choisit l'introduction durant la mise en forme, de préférence, ladite mise en forme est réalisée par malaxage extrusion, par pastillage, par la méthode de la coagulation en goutte (oil-drop selon la terminologie anglo-saxonne), par granulation au plateau tournant ou par toute autre méthode bien connue de l'homme du métier. De manière très préférée, ladite de mise en forme est réalisée par malaxage extrusion, la 2-acétylbutyrolactone et/ou ses produits d'hydrolyse pouvant être introduit(s) à tout moment du malaxage extrusion. Le matériau formé obtenu à l'issue de l'étape de mise en forme subit ensuite avantageusement une étape de traitement thermique à une température telle qu'au moins une partie du ou desdits additif(s) reste présente.

Il en est de même pour le phosphore éventuellement présent dans le dit support de l'étape a1'). Le phosphore peut être introduit à tout moment de la préparation du support, et de manière préférentielle lors de la mise en forme ou par imprégnation sur un support déjà formé telle que décrit ci-dessus. Si le phosphore est introduit seul à la mise en forme, c'est-à-dire sans un additif choisi parmi la 2-acétylbutyrolactone et/ou ses produits d'hydrolyse lui-même alors introduit par imprégnation, la température de calcination consécutive à son introduction peut alors avantageusement être réalisée à une température inférieure à 1000°C.

Dans l'étape a2') de la de mise en œuvre par pré-imprégnation, l'introduction des éléments du groupe VIB et du groupe VIII et éventuellement du phosphore peut être avantageusement effectuée par une ou plusieurs imprégnations en excès de solution sur le support, ou de préférence par une ou plusieurs imprégnations à sec, et, de manière préférée, par une seule imprégnation à sec dudit support, à l'aide de solution(s), de préférence aqueuse(s), contenant le ou les précurseurs de métaux et éventuellement le précurseur de phosphore.

Avantageusement, on laisse maturer le précurseur de catalyseur obtenu à l'étape a2') dans les conditions de maturation décrites ci-dessus.

Lorsqu'on souhaite introduire en outre un additif supplémentaire (en plus du ou des additif(s) choisi(s) parmi la 2-acétylbutyrolactone et/ou ses produits d'hydrolyse) ou un groupe d'additifs supplémentaires choisi parmi un composé organique contenant de l'oxygène et/ou de l'azote et/ou du soufre autre que lesdits additifs, celui-ci peut être introduit dans le support de l'étape a1') lors de la mise en forme ou par imprégnation, et/ou dans la solution d'imprégnation de l'étape a2') ou encore par une étape d'imprégnation supplémentaire à n'importe quel moment du procédé de préparation avant le séchage final de l'étape b) étant entendu qu'on n'effectue pas d'étape de calcination après son introduction.

Les trois modes décrits ci-avant peuvent être mis en œuvre seuls tels que décrits ou mélangés pour donner lieu à d'autres modes de préparation hybrides en fonction des contraintes techniques et pratiques.

Selon un autre mode de réalisation alternatif, la mise en contact selon l'étape a) combine au moins deux modes de mise en contact, par exemple la co-imprégnation d'un composé organique et la post-imprégnation d'un composé organique qui peut être identique ou différent de celui utilisé pour la co-imprégnation, étant donné qu'au moins un des composés organiques est choisi parmi la 2-acétylbutyrolactone et/ou ses produits d'hydrolyse.

Selon ce mode de mise en œuvre alternatif, la mise en contact selon l'étape a) comprend les étapes successives suivantes :
a1") on met en contact par co-imprégnation une solution contant au moins un élément du groupe VIB, au moins un élément du groupe VIII, au moins un composé organique contenant de l'oxygène et/ou de l'azote et/ou du soufre, et éventuellement du phosphore avec un support à base d'alumine ou de silice ou de silice-alumine de manière à obtenir un support imprégné,
a2")on sèche le support imprégné issu de l'étape a1") à une température inférieure à 200°C, sans le calciner ultérieurement, pour obtenir un support imprégné séché,
a3")on met en contact le support imprégné séché issu de l'étape a2") avec une solution d'au moins un composé organique contenant de l'oxygène et/ou de l'azote et/ou du soufre identique ou différent de celui utilisé dans l'étape a1 ") de manière à obtenir un précurseur de catalyseur,
a4")optionnellement, on laisse maturer le précurseur de catalyseur obtenu à l'étape a3").
et au moins un des composés organiques de l'étape a1") ou de l'étape a3") est choisi parmi la 2-acétylbutyrolactone et/ou ses produits d'hydrolyse.

Les conditions opératoires décrites ci-avant sont bien entendu applicables dans le cadre de ce dernier mode de réalisation.

### Procédé de préparation d'un catalyseur réiuvéné

Le catalyseur selon l'invention peut être un catalyseur réjuvéné. Ce catalyseur peut être préparé selon le procédé de préparation comprenant les étapes suivantes :
a) on met en contact un catalyseur régénéré contenant un support à base d'alumine ou de silice ou de silice-alumine, au moins un composant d'un élément du groupe VIB, au moins un composant d'un élément du groupe VIII et éventuellement du phosphore avec au moins un additif choisi parmi la 2-acétylbutyrolactone et/ou ses produits d'hydrolyse de manière à obtenir un précurseur de catalyseur,
b) on sèche ledit précurseur de catalyseur issu de l'étape a) à une température inférieure à 200°C, sans le calciner ultérieurement.

Selon l'étape a) on met en contact un catalyseur régénéré avec au moins un additif choisi parmi la 2-acétylbutyrolactone et/ou ses produits d'hydrolyse, de manière à obtenir un précurseur de catalyseur. Le catalyseur régénéré est un catalyseur qui a été utilisé en tant que catalyseur dans une unité catalytique et notamment en hydrotraitement et/ou hydrocraquage et qui a été soumis à au moins une étape de calcination, afin de brûler le coke (régénération). La régénération permet la combustion du carbone déposé sur le catalyseur lors de son utilisation industrielle. Elle peut être réalisée par tous les moyens connus de l'homme du métier. La régénération est en général réalisée à des températures comprises entre 350 et 550°C, et le plus souvent entre 400 et 520°C, ou entre 420 et 520°C, ou encore entre 450 et 520°C, des températures inférieures à 500°C étant souvent avantageuses.

Le catalyseur régénéré contient un support à base d'alumine ou de silice ou de silice-alumine, au moins un composant d'un élément du groupe VIB, au moins un composant d'un élément du groupe VIII et éventuellement du phosphore dans les proportion respectives indiquées ci-dessus. Suite à la régénération (étape de calcination) la fonction hydrogénante comprenant les éléments du groupe VIB et du groupe VIII du catalyseur régénéré se trouve sous une forme oxyde. Il peut également contenir d'autres dopants que le phosphore, tel que décrit ci-dessus.

Selon ce mode de mise en œuvre, la mise en contact selon l'étape a) comprend les étapes successives suivantes :
a1"') on imprègne un catalyseur régénéré contenant un support à base d'alumine ou de silice ou de silice-alumine, au moins un composant d'un élément du groupe VIB, au moins un composant d'un élément du groupe VIII et éventuellement du phosphore par une solution d'imprégnation comprenant au moins un additif choisi parmi la 2-acétylbutyrolactone et/ou ses produits d'hydrolyse de manière à obtenir un précurseur de catalyseur,
a2"') optionnellement, on laisse maturer le précurseur de catalyseur obtenu à l'étape a1"').

De préférence, la mise en contact de l'étape a) est effectuée par imprégnation du catalyseur régénéré par une solution d'imprégnation comprenant au moins un additif choisi parmi la 2-acétylbutyrolactone et/ou ses produits d'hydrolyse de manière à obtenir un précurseur de catalyseur.

Le ou les additif(s) choisi(s) parmi la 2-acétylbutyrolactone et/ou ses produits d'hydrolyse peut/peuvent avantageusement être déposé(s) en une ou plusieurs étapes soit par imprégnation en excès, soit par imprégnation à sec, soit par tout autre moyen connu de l'homme du métier. De préférence, le ou les additif(s) choisi(s) parmi la 2-acétylbutyrolactone et/ou ses produits d'hydrolyse est/sont introduit(s) en imprégnation à sec, en présence ou absence d'un solvant tel que décrit ci-dessus.

De préférence, le solvant dans la solution d'imprégnation utilisée est l'eau, ce qui facilite la mise en œuvre à l'échelle industrielle.

Le ou les additif(s) choisi(s) parmi la 2-acétylbutyrolactone et/ou ses produits d'hydrolyse est/sont avantageusement introduit(s) dans la solution d'imprégnation avec les rapports molaires par élément du groupe VIB ou du groupe VIII décrits ci-dessus.

Lorsqu'on souhaite introduire en outre un additif supplémentaire (en plus du ou des additif(s) choisi(s) parmi la 2-acétylbutyrolactone et/ou ses produits d'hydrolyse) ou un groupe d'additifs supplémentaires choisi parmi un composé organique contenant de l'oxygène et/ou de l'azote et/ou du soufre autre que lesdits additifs, celui-ci peut être introduit dans la solution d'imprégnation de l'étape a1'") ou encore par une étape d'imprégnation supplémentaire à n'importe quel moment du procédé de préparation avant le séchage final de l'étape b) étant entendu qu'on n'effectue pas d'étape de calcination après son introduction. Ce composé est introduit dans les proportions décrites ci-dessus.

Selon l'étape a2'"), on laisse optionnellement maturer le précurseur de catalyseur obtenu à l'étape a1"'), et ceci dans les conditions de maturation décrites ci-dessus.

Conformément à l'étape b) du procédé de préparation selon l'invention, le précurseur de catalyseur qui a été optionnellement maturé lors de l'étape a2"') est soumis à une étape de séchage à une température inférieure à 200°C sans étape de calcination ultérieure, telle que décrite ci-dessus.

### Sulfuration

Avant son utilisation pour la réaction d'hydrotraitement et/ou d'hydrocraquage, il est avantageux de transformer le catalyseur séché obtenu selon l'un des quelconques modes d'introduction décrit dans la présente invention en un catalyseur sulfuré afin de former son espèce active. Cette étape d'activation ou de sulfuration s'effectue par les méthodes bien connues de l'homme de l'art, et avantageusement sous une atmosphère sulfo-réductrice en présence d'hydrogène et d'hydrogène sulfuré.

A l'issue de l'étape b) selon les différents modes de préparation du procédé selon l'invention, ledit catalyseur obtenu est donc avantageusement soumis à une étape de sulfuration, sans étape de calcination intermédiaire.

Ledit catalyseur séché est avantageusement sulfuré de manière *ex situ* ou *in situ.* Les agents sulfurants sont le gaz H₂S ou tout autre composé contenant du soufre utilisé pour l'activation des charges hydrocarbures en vue de sulfurer le catalyseur. Lesdits composés contenant du soufre sont avantageusement choisis parmi les disulfures d'alkyle tel que par exemple le disulfure de diméthyle (DMDS), les sulfures d'alkyle, tel que par exemple le sulfure de diméthyle, les thiols tel que par exemple le n-butylmercaptan (ou 1-butanethiol), les composés polysulfures de type tertiononylpolysulfure, ou tout autre composé connu de l'homme du métier permettant d'obtenir une bonne sulfuration du catalyseur. De manière préféré le catalyseur est sulfuré *in situ* en présence d'un agent sulfurant et d'une charge hydrocarbonée. De manière très préférée le catalyseur est sulfuré *in situ* en présence d'une charge hydrocarbonée additivée de disulfure de diméthyle.

### Procédé d'hydrotraitement et/ou hydrocraquage

Enfin, un autre objet de l'invention est l'utilisation du catalyseur selon l'invention ou préparé selon le procédé de préparation selon l'invention dans des procédés d'hydrotraitement et/ou d'hydrocraquage de coupes hydrocarbonées.

Le catalyseur selon l'invention et ayant de préférence préalablement subi une étape de sulfuration est avantageusement utilisé pour les réactions d'hydrotraitement et/ou d'hydrocraquage de charges hydrocarbonées telles que les coupes pétrolières, les coupes issues du charbon ou les hydrocarbures produits à partir du gaz naturel, éventuellement en mélanges ou encore à partir d'une coupe hydrocarbonée issue de la biomasse et plus particulièrement pour les réactions d'hydrogénation, d'hydrodéazotation, d'hydrodésaromatisation, d'hydrodésulfuration, d'hydrodéoxygénation, d'hydrodémétallation ou d'hydroconversion de charges hydrocarbonées.

Dans ces utilisations, le catalyseur selon l'invention et ayant de préférence préalablement subi une étape de sulfuration présente une activité améliorée par rapport aux catalyseurs de l'art antérieur. Ce catalyseur peut aussi avantageusement être utilisé lors du prétraitement des charges de craquage catalytique ou d'hydrocraquage, ou l'hydrodésulfuration des résidus ou l'hydrodésulfuration poussée des gazoles (ULSD Ultra Low Sulfur Diesel selon la terminologie anglo-saxonne).

Les charges employées dans le procédé d'hydrotraitement sont par exemple des essences, des gazoles, des gazoles sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de conversions thermiques ou catalytiques, des charges lignocellulosiques ou plus généralement des charges issues de la biomasse, prises seules ou en mélange. Les charges qui sont traitées, et en particulier celles citées ci-dessus, contiennent généralement des hétéroatomes tels que le soufre, l'oxygène et l'azote et, pour les charges lourdes, elles contiennent le plus souvent également des métaux.

Les conditions opératoires utilisées dans les procédés mettant en œuvre les réactions d'hydrotraitement de charges hydrocarbonées décrites ci-dessus sont généralement les suivantes : le température est avantageusement comprise entre 180 et 450°C, et de préférence entre 250 et 440 °C, la pression est avantageusement comprise entre 0,5 et 30 MPa, et de préférence entre 1 et 18 MPa, la vitesse volumique horaire est avantageusement comprise entre 0,1 et 20 h⁻¹ et de préférence entre 0,2 et 5 h⁻¹, et le rapport hydrogène/charge exprimé en volume d'hydrogène, mesuré dans les conditions normales de température et pression, par volume de charge liquide est avantageusement compris entre 50 I/I à 5000 I/I et de préférence 80 à 2000 I/I.

Selon un premier mode d'utilisation, ledit procédé d'hydrotraitement selon l'invention est un procédé d'hydrotraitement, et notamment d'hydrodésulfuration (HDS) d'une coupe gazole réalisé en présence d'au moins un catalyseur selon l'invention. Ledit procédé d'hydrotraitement selon l'invention vise à éliminer les composés soufrés présents dans ladite coupe gazole de façon à atteindre les normes environnementales en vigueur, à savoir une teneur en soufre autorisée jusqu'à 10 ppm. Il permet aussi de réduire les teneurs en aromatiques et en azote de la coupe gazole à hydrotraiter.

Ladite coupe gazole à hydrotraiter selon le procédé de l'invention contient de 0,02 à 5,0 % poids de soufre. Elle est avantageusement issue de la distillation directe (ou gazole straight run selon la terminologie anglo-saxonne), d'une unité de cokéfaction (coking selon la terminologie anglo-saxonne), d'une unité de viscoréduction (visbreaking selon la terminologie anglo-saxonne), d'une unité de vapocraquage (steam cracking selon la terminologie anglo-saxonne), d'une unité d'hydrotraitement et/ou d'hydrocraquage de charges plus lourdes et/ou d'une unité de craquage catalytique (Fluid Catalytic Cracking selon la terminologie anglo-saxonne). Ladite coupe gazole présente préférentiellement au moins 90% des composés dont la température d'ébullition est comprise entre 250°C et 400°C à pression atmosphérique.

Le procédé d'hydrotraitement de ladite coupe gazole selon l'invention est mis en œuvre dans les conditions opératoires suivantes : une température comprise entre 200 et 400°C, préférentiellement entre 300 et 380°C, une pression totale comprise entre 2 MPa et 10 MPa et plus préférentiellement entre 3 MPa et 8 MPa avec un ratio volume d'hydrogène par volume de charge hydrocarbonée, exprimé en volume d'hydrogène, mesuré dans les conditions normales de température et pression, par volume de charge liquide, compris entre 100 et 600 litres par litre et plus préférentiellement entre 200 et 400 litres par litre et une vitesse volumique horaire comprise entre 1 et 10 h⁻¹, préférentiellement entre 2 et 8 h⁻¹. La VVH correspond à l'inverse du temps de contact exprimée en heure et est définie par le rapport du débit volumique de charge hydrocarbonée liquide par le volume de catalyseur chargé dans l'unité réactionnelle mettant en œuvre le procédé d'hydrotraitement selon l'invention. L'unité réactionnelle mettant en œuvre le procédé d'hydrotraitement de ladite coupe gazole selon l'invention est préférentiellement opérée en lit fixe, en lit mobile ou en lit bouillonnant, de préférence en lit fixe.

Selon un second mode d'utilisation, ledit procédé d'hydrotraitement et/ou d'hydrocraquage selon l'invention est un procédé d'hydrotraitement (notamment hydrodésulfuration, hydrodéazoation, hydrogénation des aromatiques) et/ou d'hydrocraquage d'une coupe de distillat sous vide réalisé en présence d'au moins un catalyseur selon l'invention. Ledit procédé d'hydrotraitement et/ou d'hydrocraquage, autrement appelé procédé de prétraitement d'hydrocraquage ou d'hydrocraquage selon l'invention vise selon les cas à éliminer les composés soufrés, azotés ou aromatiques présents dans ladite coupe distillat de façon à effectuer un prétraitement avant conversion dans des procédés de craquage catalytique ou d'hydroconversion, ou à hydrocraquer la coupe distillat qui aurait éventuellement été prétraitée auparavant si besoin.

Des charges très variées peuvent être traitées par les procédés d'hydrotraitement et/ou d'hydrocraquage de distillats sous vide décrits ci-dessus. Généralement elles contiennent au moins 20% volume et souvent au moins 80% volume de composés bouillant au-dessus de 340°C à pression atmosphérique. La charge peut être par exemple des distillats sous vide ainsi que des charges provenant d'unités d'extraction d'aromatiques des bases d'huile lubrifiante ou issues du déparaffinage au solvant des bases d'huile lubrifiante, et/ou d'huiles désasphaltées, ou encore la charge peut être une huile désasphaltée ou des paraffines issues du procédé Fischer-Tropsch ou encore tout mélange des charges précédemment citées. En général, les charges ont un point d'ébullition T5 supérieur à 340°C à pression atmosphérique, et mieux encore supérieur à 370°C à pression atmosphérique, c'est à dire que 95% des composés présents dans la charge ont un point d'ébullition supérieur à 340°C, et mieux encore supérieur à 370°C. La teneur en azote des charges traitées dans les procédés selon l'invention est usuellement supérieure à 200 ppm poids, de préférence comprise entre 500 et 10 000 ppm poids. La teneur en soufre des charges traitées dans les procédés selon l'invention est usuellement comprise entre 0,01 et 5,0 % poids. La charge peut éventuellement contenir des métaux (par exemple le nickel et vanadium). La teneur en asphaltènes est généralement inférieure à 3 000 ppm poids.

Le catalyseur d'hydrotraitement et/ou d'hydrocraquage est généralement mis en contact, en présence d'hydrogène, avec les charges décrites précédemment, à une température supérieure à 200°C, souvent comprise entre 250°C et 480°C, avantageusement comprise entre 320°C et 450°C, de préférence entre 330°C et 435°C, sous une pression supérieure à 1 MPa, souvent comprise entre 2 et 25 MPa, de manière préférée entre 3 et 20 MPa, la vitesse volumique étant comprise entre 0,1 et 20,0 h⁻¹ et de préférence 0,1-6,0 h⁻¹, de préférence, 0,2-3,0 h⁻¹, et la quantité d'hydrogène introduite est telle que le rapport volumique litre d'hydrogène/litre d'hydrocarbure, exprimé en volume d'hydrogène, mesuré dans les conditions normales de température et pression, par volume de charge liquide, soit compris entre 80 et 5 000 I/I et le plus souvent entre 100 et 2 000 I/I. Ces conditions opératoires utilisées dans les procédés selon l'invention permettent généralement d'atteindre des conversions par passe, en produits ayant des points d'ébullition inférieurs à 340°C à pression atmosphérique, et mieux inférieurs à 370°C à pression atmosphérique, supérieures à 15% et de manière encore plus préférée comprises entre 20 et 95%.

Les procédés d'hydrotraitement et/ou d'hydrocraquage de distillats sous vide mettant en œuvre les catalyseurs selon l'invention couvrent les domaines de pression et de conversion allant de l'hydrocraquage doux à l'hydrocraquage haute pression. On entend par hydrocraquage doux, un hydrocraquage conduisant à des conversions modérées, généralement inférieures à 40%, et fonctionnant à basse pression, généralement entre 2 MPa et 6 MPa.

Le catalyseur selon l'invention peut être utilisé seul, en un seul ou plusieurs lits catalytiques en lit fixe, dans un ou plusieurs réacteurs, dans un schéma d'hydrocraquage dit en une étape, avec ou sans recyclage liquide de la fraction non convertie, ou encore dans un schéma d'hydrocraquage dit en deux étapes, éventuellement en association avec un catalyseur d'hydroraffinage situé en amont du catalyseur de la présente invention.

Selon un troisième mode d'utilisation, ledit procédé d'hydrotraitement et/ou d'hydrocraquage selon l'invention est avantageusement mis en œuvre comme prétraitement dans un procédé de craquage catalytique à lit fluidisé (ou procédé FCC pour Fluid Catalytic Cracking selon la terminologie anglo-saxonne). Les conditions opératoires du prétraitement en termes de gamme de température, pression, taux de recyclage d'hydrogène, vitesse volumique horaire sont généralement identiques à celles décrites ci-dessus pour les procédés d'hydrotraitement et/ou d'hydrocraquage de distillats sous vide. Le procédé FCC peut être exécutée de manière classique connue des hommes du métier dans les conditions adéquates de craquage en vue de produire des produits hydrocarbonés de plus faible poids moléculaire. On trouvera par exemple une description sommaire du craquage catalytique dans ULLMANS ENCYCLOPEDIA OF INDUSTRIAL CHEMISTRY VOLUME A 18, 1991, pages 61 à 64.

Selon un quatrième mode d'utilisation, ledit procédé d'hydrotraitement et/ou d'hydrocraquage selon l'invention est un procédé d'hydrotraitement (notamment hydrodésulfuration) d'une coupe d'essence en présence d'au moins un catalyseur selon l'invention.

Contrairement à d'autres procédés d'hydrotraitement, l'hydrotraitement (notamment l'hydrodésulfuration) des essences doit permettre de répondre à une double contrainte antagoniste : assurer une hydrodésulfuration profonde des essences et limiter l'hydrogénation des composés insaturés présents afin de limiter la perte d'indice d'octane.

La charge est généralement une coupe d'hydrocarbures ayant un intervalle de distillation compris entre 30 et 260°C. De préférence, cette coupe d'hydrocarbures est une coupe du type essence. De manière très préférée, la coupe essence est une coupe essence oléfinique issue par exemple d'une unité de craquage catalytique (Fluid Catalytic Cracking selon la terminologie anglo-saxonne).

Le procédé d'hydrotraitement consiste à mettre en contact la coupe d'hydrocarbures avec le catalyseur selon l'invention et de l'hydrogène dans les conditions suivantes: à une température comprise entre 200 et 400°C, de préférence comprise entre 230 et 330°C, à une pression totale comprise entre 1 et 3 MPa, de préférence comprise entre 1,5 et 2,5 MPa, à une Vitesse Volumique Horaire (VVH), définie comme étant le débit volumique de charge rapporté au volume de catalyseur, comprise entre 1 et 10 h⁻¹, de préférence comprise entre 2 et 6 h⁻¹ et à un rapport volumique hydrogène/charge essence compris entre 100 et 600 NI/I, de préférence compris entre 200 et 400 NI/I.

Le procédé d'hydrotraitement des essences peut être réalisé dans un ou plusieurs réacteurs en série du type lit fixe ou du type lit bouillonnant. Si le procédé est mis en œuvre au moyen d'au moins deux réacteurs en série, il est possible de prévoir un dispositif d'élimination de l'H₂S de l'effluent issu du premier réacteur d'hydrodésulfuration avant de traiter ledit effluent dans le deuxième réacteur d'hydrodésulfuration.

Les exemples qui suivent démontrent le gain d'activité important sur les catalyseurs préparés selon le procédé selon l'invention par rapport aux catalyseurs de l'art antérieur et précisent l'invention sans toutefois en limiter la portée.

### Exemples

### Exemple 1 : Préparation des catalyseurs CoMoP sur alumine sans composé organique C1 et C2 (non-conformes à l'invention).

Sur un support d'alumine présentant une surface BET de 230 m²/g, un volume poreux obtenu par porosimétrie au mercure de 0,78 ml/g et un diamètre moyen des pores de 11,5 nm défini comme le diamètre médian en volume par porosimétrie au mercure et qui se présente sous la forme « extrudé », on ajoute du cobalt, du molybdène et du phosphore. La solution d'imprégnation est préparée par dissolution à 90°C de l'oxyde de molybdène (21,1 g) et d'hydroxyde de cobalt (5,04 g) dans 11,8 g d'une solution aqueuse d'acide phosphorique à 85% et de l'eau. Après imprégnation à sec, les extrudés sont laissés à maturer en atmosphère saturée en eau pendant 24 h à température ambiante, puis ils sont séchés à 90°C pendant 16 heures. Le précurseur catalytique séché ainsi obtenu est noté C1. La calcination du précurseur catalytique C1 à 450°C pendant 2 heures conduit au catalyseur calciné C2. La composition finale des catalyseurs C1 et C2 exprimée sous forme d'oxydes et rapportée à la masse de catalyseur sec est alors la suivante : MoO₃ = 19,5 ± 0,2 % poids, CoO = 3,8 ± 0,1 % poids et P₂O₅ = 6,7 ± 0,1 % poids.

### Exemple 2 : Préparation des catalyseurs CoMoP sur alumine C3 (non conforme à l'invention), C4 (conforme à l'invention) par co-imprégnation.

Sur le support d'alumine décrit précédemment dans l'exemple 1 et qui se présente sous la forme « extrudé », on ajoute du cobalt, du molybdène et du phosphore. La solution d'imprégnation est préparée par dissolution à 90°C de l'oxyde de molybdène (28,28 g) et d'hydroxyde de cobalt (6,57 g) dans 15,85 g d'une solution aqueuse d'acide phosphorique à 85% et de l'eau. Après homogénéisation du mélange précédent, 38 g d'acide citrique ont été ajoutés avant ajustement du volume de solution au volume poreux du support par addition d'eau. Le rapport molaire (acide citrique)/Mo est égal à 1 mol/mol et celui (acide citrique)/Co est égal à 2,7 mol/mol. Après imprégnation à sec, les extrudés sont laissés à maturer en atmosphère saturée en eau pendant 24 h à température ambiante, puis ils sont séchés à 120°C pendant 16 heures. Le précurseur catalytique séché ainsi obtenu est noté C3. La composition finale du catalyseur C3, exprimée sous forme d'oxydes et rapportée à la masse de catalyseur sec est alors la suivante : MoO₃ = 19,6 ± 0,2 % poids, CoO = 3,7 ± 0,1 % poids et P₂O₅ = 6,7 ± 0,1 % poids.

Le catalyseurs C4 selon l'invention est préparé comme suit. Sur le support d'alumine décrit dans l'exemple 1 et qui se présente sous la forme « extrudé », on ajoute du cobalt, du molybdène et du phosphore. Une solution d'imprégnation a été préparée par dissolution à 90°C de l'oxyde de molybdène (58,5 g) et d'hydroxyde de cobalt (13,6 g) dans 32,8 g d'une solution aqueuse d'acide phosphorique à 85% et de l'eau. Après homogénéisation du mélange précédent, de la 2-acétylbutyrolactone a été ajoutée dans la solution à 0,5 moles par mole de molybdène soit 1,4 moles par mole de cobalt pour conduire au catalyseur C4. Le volume de la solution a été ajusté au volume poreux du support par addition d'eau avant chaque imprégnation. Après imprégnation à sec, les extrudés des deux catalyseurs ont été laissés à maturer en atmosphère saturée en eau pendant 24 heures à température ambiante, puis séchés à 120°C pendant 16 heures. La composition finale du catalyseur C4 exprimée sous forme d'oxydes et rapportée à la masse de catalyseur sec est alors la suivante : MoO₃ = 19,4 ± 0,2 % poids, CoO = 3,6 ± 0,1 % poids et P₂O₅ = 6,8 ± 0,1 % poids.

### Exemple 3 : Préparation du catalyseur CoMoP sur alumine C5 (conforme à l'invention) par pré-imprégnation.

Sur le support d'alumine décrit précédemment dans l'exemple 1 et qui se présente sous la forme « extrudé », on ajoute 13 g de la 2-acétylbutyrolactone diluée dans l'eau de manière à obtenir une solution de volume total égal au volume poreux du support. La solution ainsi formée est ensuite imprégnée à sec sur le support avant d'observer un temps de maturation de 3 heures en atmosphère saturée en eau et à température ambiante, suivi d'un séchage à 120°C durant 2 heures. Le support modifié est ensuite imprégné par une nouvelle solution d'imprégnation préparée par dissolution à chaud de l'oxyde de molybdène (29,25 g) et d'hydroxyde de cobalt (6,80 g) dans 16,4 g d'une solution aqueuse d'acide phosphorique à 85% et de l'eau en prenant soin d'ajuster par addition d'eau le volume de cette dernière solution au volume poreux du support modifié précédent. Après imprégnation à sec, les extrudés ont été laissés à maturer en atmosphère saturée en eau pendant 24 h à température ambiante, puis séchés à 120°C pendant 16 heures pour conduire au catalyseur C5. La composition finale du catalyseur C5 exprimée sous forme d'oxydes et rapportée à la masse de catalyseur sec est alors la suivante : MoO₃ = 19,3 ± 0,2 % poids, CoO = 3,5 ± 0,1 % poids et P₂O₅ = 6,6 ± 0,1 % poids. Les quantités engagées sont telles que la quantité de 2-acétylbutyrolactone est de 0,5 moles par mole de molybdène soit 1,4 moles par mole de cobalt.

### Exemple 4 : Evaluation en HDS de gazole des catalyseurs C1, C2 et C3 (non conformes à l'invention) et C4 et C5 (conformes à l'invention)

Les catalyseurs C1, C2 et C3 (non conformes à l'invention) et C4 et C5_(conformes à l'invention) ont été testés en HDS de gazole.

Caractéristiques de la charge gazole utilisée : densité à 15 °C: 0,8522 g/cm³, soufre : 1,44 % en poids.
- Distillation Simulée :
   - PI : 155 °C
   - 10 % : 247 °C
   - 50% : 315°C
   - 90 % : 392 °C
   - PF : 444 °C

Le test est mené dans un réacteur pilote isotherme à lit fixe traversé, les fluides circulant de bas en haut. Après sulfuration in situ à 350 °C dans l'unité sous pression au moyen du gazole du test auquel est additionné 2 % en poids de diméthyldisulfure, le test d'hydrodésulfuration a été conduit dans les conditions opératoires suivantes : une pression totale de 7 MPa, un volume de catalyseur de 30 cm³, une température de 330 à 360 °C, un débit d'hydrogène de 24 I/h et un débit de charge de 60 cm³/h.

Les performances catalytiques des catalyseurs testés sont données dans le Tableau 1. Elles sont exprimées en degrés Celsius à partir d'un catalyseur comparatif choisi comme référence (C2) : elles correspondent à l'écart de température à appliquer pour atteindre 50 ppm de soufre dans l'effluent. Une valeur négative signifie que la cible de teneur en soufre est atteinte pour une température plus basse et qu'il y a donc un gain d'activité. Une valeur positive signifie que la cible de teneur en soufre est atteinte pour une température plus élevée et qu'il y a donc une perte d'activité. Les résultats obtenus sont reportés dans le Tableau 1.

Le Tableau 1 montre clairement le gain sur l'effet catalytique apporté par la 2-acétylbutyrolactone. En effet, les catalyseurs C4 et C5 (selon l'invention) présentent des activités supérieures à celles obtenues pour tous les autres catalyseurs évalués. La 2-acétylbutyrolactone apporte donc un gain d'activité catalytique quel que soit son mode d'introduction.

L'avantage du catalyseur selon l'invention est significatif alors qu'il présente une plus faible proportion de composé organique que le catalyseur C3, avec ainsi une efficacité intrinsèque de la 2-acétylbutyrolactone supérieure à celle des autres composés pour lesquels il est nécessaire d'introduire une plus grande proportion de composé pour observer un effet catalytique important.

**Tableau 1 : Activité relative à iso-volume en hydrodésulfuration de gazole des catalyseurs C1, C2 et C3 (non conformes à l'invention) et C4 et C5 (conformes à l'invention) par rapport au catalyseur C2 (non-conforme)**

| Catalyseur (comparatif ou selon l'invention) | Composé organique utilisé et rapport molaire/Mo | Mode d'introduction du composé organique (post-/co-/pré-imprégnation | Traitement thermique | Activité HDS |
|---|---|---|---|---|
| C1 (comp) | néant | Sans objet | Séché 120°C | Base + 1,0°C |
| C2 (comp) | néant | Sans objet | Calciné | Base |
| C3 (comp) | Acide citrique - 1,0 | CO | Séché 120°C | Base - 2,9 °C |
| **C4 (inv)** | 2-acétylbutyrolactone **-0,5** | **CO** | **Séché 120°C** | **Base - 4,9°C** |
| **C5 (inv)** | 2-acétylbutyrolactone **-0,5** | **PRE** | **Séché 120 °C** | **Base - 5,1°C** |

## Revendications

1. Catalyseur comprenant un support à base d'alumine ou de silice ou de silice-alumine, au moins un élément du groupe VIII, au moins un élément du groupe VIB, et au moins un additif choisi parmi la 2-acétylbutyrolactone, l'acide 2-(2-hydroxyéthyl)-3-oxobutanoïque et/ou l'acide 3-hydroxy-2-(2-hydroxyéthyl)-2-butenoïque.

2. Catalyseur selon la revendication 1, dans lequel la teneur en élément du groupe VIB est comprise entre 5 et 40 % poids exprimé en oxyde de métal du groupe VIB par rapport au poids total du catalyseur et la teneur en élément du groupe VIII est comprise entre 1 et 10 % poids exprimé en oxyde de métal du groupe VIII par rapport au poids total du catalyseur.

3. Catalyseur selon la revendication 1 ou 2, dans lequel le rapport molaire élément du groupe VIII sur élément du groupe VIB dans le catalyseur est compris entre 0,1 et 0,8.

4. Catalyseur selon l'une des revendications 1 à 3, lequel contient en outre du phosphore, la teneur en phosphore étant comprise entre 0,1 et 20 % poids exprimé en P₂O₅ par rapport au poids total du catalyseur et le rapport molaire phosphore sur l'élément du groupe VIB dans le catalyseur est supérieur ou égal à 0,05.

5. Catalyseur selon l'une des revendications 1 à 4, dans lequel la teneur totale en additif(s) choisi parmi la 2-acétylbutyrolactone, l'acide 2-(2-hydroxyéthyl)-3-oxobutanoïque et/ou l'acide 3-hydroxy-2-(2-hydroxyéthyl)-2-butenoïque est comprise entre 1 et 45 % poids par rapport au poids total du catalyseur.

6. Catalyseur selon l'une des revendications 1 à 5, lequel contient en outre un composé organique autre que l'additif choisi parmi la 2-acétylbutyrolactone, l'acide 2-(2-hydroxyéthyl)-3-oxobutanoïque et/ou l'acide 3-hydroxy-2-(2-hydroxyéthyl)-2-butenoïque, ledit composé organique contenant de l'oxygène et/ou de l'azote et/ou du soufre.

7. Catalyseur selon la revendication 6, dans lequel le composé organique est choisi parmi un composé comportant une ou plusieurs fonctions chimiques choisies parmi une fonction carboxylique, alcool, thiol, thioéther, sulfone, sulfoxyde, éther, aldéhyde, cétone, ester, carbonate, amine, nitrile, imide, oxime, urée et amide.

8. Catalyseur selon la revendication 7, dans lequel le composé organique est choisi parmi le triéthylèneglycol, le diéthylèneglycol, l'éthylèneglycol, l'acide éthylènediaminetétra-acétique (EDTA), l'acide maléique, l'acide malonique, l'acide citrique, le diméthylformamide, la N-méthylpyrrolidone, le carbonate de propylène, la bicine, ou la tricine

9. Catalyseur selon l'une des revendications 1 à 8, dans lequel le support contient de 0,1 à 50% poids de zéolithe.

10. Catalyseur selon l'une des revendications 1 à 9, **caractérisé en ce qu'**il est au moins partiellement sulfuré.

11. Procédé de préparation d'un catalyseur selon l'une des revendications 1 à 10 comprenant les étapes suivantes :
a) on met en contact au moins un composant d'un élément du groupe VIB, au moins un composant d'un élément du groupe VIII, au moins un additif choisi parmi la 2-acétylbutyrolactone, l'acide 2-(2-hydroxyéthyl)-3-oxobutanoïque et/ou l'acide 3-hydroxy-2-(2-hydroxyéthyl)-2-butenoïque et éventuellement du phosphore avec un support à base d'alumine ou de silice ou de silice-alumine, ou on met en contact un catalyseur régénéré contenant un support à base d'alumine ou de silice ou de silice-alumine, au moins un composant d'un élément du groupe VIB, au moins un composant d'un élément du groupe VIII et éventuellement du phosphore avec au moins un additif choisi parmi la 2-acétylbutyrolactone, l'acide 2-(2-hydroxyéthyl)-3-oxobutanoïque et/ou l'acide 3-hydroxy-2-(2-hydroxyéthyl)-2-butenoïque, de manière à obtenir un précurseur de catalyseur,
b) on sèche ledit précurseur de catalyseur issu de l'étape a) à une température inférieure à 200°C, sans le calciner ultérieurement.

12. Procédé selon la revendication 11, dans lequel l'étape a) est l'étape suivante :
a')on imprègne un support à base d'alumine ou de silice ou de silice-alumine par au moins une solution contenant au moins un élément du groupe VIB, au moins un élément du groupe VIII, au moins un additif choisi parmi la 2-acétylbutyrolactone, l'acide 2-(2-hydroxyéthyl)-3-oxobutanoïque et/ou l'acide 3-hydroxy-2-(2-hydroxyéthyl)-2-butenoïque et éventuellement du phosphore de manière à obtenir un précurseur de catalyseur.

13. Procédé selon la revendication 11, dans lequel l'étape a) comprend les étapes suivantes :
a1) on imprègne un support à base d'alumine ou de silice ou de silice-alumine par au moins une solution contenant au moins un élément du groupe VIB, au moins un élément du groupe VIII et éventuellement du phosphore pour obtenir un support imprégné,
a2) on sèche le support imprégné obtenu à l'étape a1) à une température inférieure à 200°C pour obtenir un support imprégné séché, et optionnellement on calcine le support imprégné séché pour obtenir un support imprégné calciné,
a3) on imprègne le support imprégné séché et éventuellement calciné obtenu à l'étape a2) par une solution d'imprégnation comprenant au moins un additif choisi parmi la 2-acétylbutyrolactone, l'acide 2-(2-hydroxyéthyl)-3-oxobutanoïque et/ou l'acide 3-hydroxy-2-(2-hydroxyéthyl)-2-butenoïque de manière à obtenir un précurseur de catalyseur,
a4) optionnellement, on laisse maturer le précurseur de catalyseur obtenu à l'étape a3).

14. Procédé selon la revendication 11, dans lequel l'étape a) comprend les étapes suivantes :
a1') on prépare un support comprenant au moins un additif choisi parmi la 2-acétylbutyrolactone, l'acide 2-(2-hydroxyéthyl)-3-oxobutanoïque et/ou l'acide 3-hydroxy-2-(2-hydroxyéthyl)-2-butenoïque et éventuellement au moins une partie du phosphore,
a2') on imprègne le support obtenu à l'étape a1') par une solution d'imprégnation comprenant au moins un élément du groupe VIB, au moins un élément du groupe VIII et éventuellement du phosphore de manière à obtenir un précurseur de catalyseur,
a3') optionnellement, on laisse maturer le précurseur de catalyseur obtenu à l'étape a2').

15. Procédé selon la revendication 11, dans lequel l'étape a) comprend les étapes suivantes :
a1") on met en contact par co-imprégnation une solution contant au moins un élément du groupe VIB, au moins un élément du groupe VIII, au moins un composé organique contenant de l'oxygène et/ou de l'azote et/ou du soufre, et éventuellement du phosphore avec un support à base d'alumine ou de silice ou de silice-alumine de manière à obtenir un support imprégné,
a2")on sèche le support imprégné issu de l'étape a1") à une température inférieure à 200°C, sans le calciner ultérieurement, pour obtenir un support imprégné séché,
a3")on met en contact le support imprégné séché issu de l'étape a2") avec une solution d'au moins un composé organique contenant de l'oxygène et/ou de l'azote et/ou du soufre identique ou différent de celui utilisé dans l'étape a1") de manière à obtenir un précurseur de catalyseur,
a4")optionnellement, on laisse maturer le précurseur de catalyseur obtenu à l'étape a3"),
et au moins un des composés organiques de l'étape a1") ou de l'étape a3") est choisi parmi la 2-acétylbutyrolactone, l'acide 2-(2-hydroxyéthyl)-3-oxobutanoïque et/ou l'acide 3-hydroxy-2-(2-hydroxyéthyl)-2-butenoïque.

16. Procédé selon la revendication 11, dans lequel l'étape a) comprend les étapes suivantes :
a1'") on imprègne un catalyseur régénéré contenant un support à base d'alumine ou de silice ou de silice-alumine, au moins un composant d'un élément du groupe VIB, au moins un composant d'un élément du groupe VIII et éventuellement du phosphore par une solution d'imprégnation comprenant au moins un additif choisi parmi la 2-acétylbutyrolactone, l'acide 2-(2-hydroxyéthyl)-3-oxobutanoïque et/ou l'acide 3-hydroxy-2-(2-hydroxyéthyl)-2-butenoïque de manière à obtenir un précurseur de catalyseur,
a2"') optionnellement, on laisse maturer le précurseur de catalyseur obtenu à l'étape a1"').

17. Procédé selon l'une des revendications 11 à 16, dans lequel le rapport molaire total du ou des additif(s) choisi(s) parmi la 2-acétylbutyrolactone, l'acide 2-(2-hydroxyéthyl)-3-oxobutanoïque et/ou l'acide 3-hydroxy-2-(2-hydroxyéthyl)-2-butenoïque par élément(s) du groupe VIII est compris entre 0,1 et 5,0 mol/mol.

18. Utilisation du catalyseur selon l'une des revendications 1 à 10 ou préparé selon l'une des revendications 11 à 17 dans un procédé d'hydrotraitement et/ou d'hydrocraquage de coupes hydrocarbonées.

## Patentansprüche

1. Katalysator, umfassend einen Träger auf Basis von Aluminiumoxid oder Siliciumdioxid oder Siliciumdioxid-Aluminiumoxid, mindestens ein Element der Gruppe VIII, mindestens ein Element der Gruppe VIB und mindestens ein Additiv, das aus 2-Acetylbutyrolacton, 2-(2-Hydroxyethyl)-3-oxobutansäure und/oder 3-Hydroxy-2-(2-hydroxyethyl)-2-butensäure ausgewählt ist.

2. Katalysator nach Anspruch 1, wobei der Gehalt an Element der Gruppe VIB zwischen 5 und 40 Gew.-%, ausgedrückt als Oxid des Metalls der Gruppe VIB bezogen auf das Gesamtgewicht des Katalysators, liegt und der Gehalt an Element der Gruppe VIII zwischen 1 und 10 Gew.-%, ausgedrückt als Oxid des Metalls der Gruppe VIII bezogen auf das Gesamtgewicht des Katalysators, liegt.

3. Katalysator nach Anspruch 1 oder 2, wobei das Molverhältnis von Element der Gruppe VIII zu Element der Gruppe VIB in dem Katalysator zwischen 0,1 und 0,8 liegt.

4. Katalysator nach einem der Ansprüche 1 bis 3, der außerdem Phosphor enthält, wobei der Phosphorgehalt zwischen 0,1 und 20 Gew.-%, ausgedrückt als P₂O₅ bezogen auf das Gesamtgewicht des Katalysators, liegt und das Molverhältnis von Phosphor zu Element der Gruppe VIB in dem Katalysator größer oder gleich 0,05 ist.

5. Katalysator nach einem der Ansprüche 1 bis 4, wobei der Gesamtgehalt an Additiv bzw. Additiven, das bzw. die aus 2-Acetylbutyrolacton, 2-(2-Hydroxyethyl)-3-oxobutansäure und/oder 3-Hydroxy-2-(2-hydroxyethyl)-2-butensäure ausgewählt ist bzw. sind, zwischen 1 und 45 Gew.-%, bezogen auf das Gesamtgewicht des Katalysators, liegt.

6. Katalysator nach einem der Ansprüche 1 bis 5, der außerdem eine organische Verbindung enthält, die von dem Additiv, das aus 2-Acetylbutyrolacton, 2-(2-Hydroxyethyl)-3-oxobutansäure und/oder 3-Hydroxy-2-(2-hydroxyethyl)-2-butensäure ausgewählt ist, verschieden ist, wobei die organische Verbindung Sauerstoff und/oder Stickstoff und/oder Schwefel enthält.

7. Katalysator nach Anspruch 6, wobei die organische Verbindung aus einer Verbindung mit einer oder mehreren chemischen Funktionen, die aus einer Carboxyl-, Alkohol-, Thiol-, Thioether-, Sulfon-, Sulfoxid-, Ether-, Aldehyd-, Keton-, Ester-, Carbonat-, Amin-, Nitril-, Imid-, Oxim-, Harnstoff- und Amidfunktion ausgewählt sind, ausgewählt ist.

8. Katalysator nach Anspruch 7, wobei die organische Verbindung aus Triethylenglykol, Diethylenglykol, Ethylenglykol, Ethylendiamintetraessigsäure (EDTA), Maleinsäure, Malonsäure, Citronensäure, Dimethylformamid, N-Methylpyrrolidon, Propylencarbonat, Bicin oder Tricin ausgewählt ist.

9. Katalysator nach einem der Ansprüche 1 bis 8, wobei der Träger 0,1 bis 50 Gew.-% Zeolith enthält.

10. Katalysator nach einem der Ansprüche 1 bis 9, **dadurch gekennzeichnet, dass** er zumindest teilweise geschwefelt ist.

11. Verfahren zur Herstellung eines Katalysators nach einem der Ansprüche 1 bis 10, das folgende Schritte umfasst:
a) man bringt mindestens eine Komponente eines Elements der Gruppe VIB, mindestens eine Komponente eines Elements der Gruppe VIII, mindestens ein Additiv, das aus 2-Acetylbutyrolacton, 2-(2-Hydroxyethyl)-3-oxobutansäure und/oder 3-Hydroxy-2-(2-hydroxyethyl)-2-butensäure ausgewählt ist, und gegebenenfalls Phosphor mit einem Träger auf Basis von Aluminiumoxid oder Siliciumdioxid oder Siliciumdioxid-Aluminiumoxid in Kontakt, oder man bringt einen regenerierten Katalysator, der einen Träger auf Basis von Aluminiumoxid oder Siliciumdioxid oder Siliciumdioxid-Aluminiumoxid umfasst, mindestens eine Komponente eines Elements der Gruppe VIB, mindestens eine Komponente eines Elements der Gruppe VIII und gegebenenfalls Phosphor mit einem Additiv, das aus 2-Acetylbutyrolacton, 2-(2-Hydroxyethyl)-3-oxobutansäure und/oder 3-Hydroxy-2-(2-hydroxyethyl)-2-butensäure ausgewählt ist, in Kontakt, wodurch eine Katalysatorvorstufe erhalten wird,
b) man trocknet die Katalysatorvorstufe aus Schritt a) bei einer Temperatur von weniger als 200 °C ohne anschließende Calcinierung.

12. Verfahren nach Anspruch 11, wobei es sich bei dem Schritt a) um den folgenden Schritt handelt:
a') man imprägniert einen Träger auf Basis von Aluminiumoxid oder Siliciumdioxid oder Siliciumdioxid-Aluminiumoxid mit mindestens einer Lösung, die mindestens ein Element der Gruppe VIB, mindestens ein Element der Gruppe VIII, mindestens ein Additiv, das aus 2-Acetylbutyrolacton, 2-(2-Hydroxyethyl)-3-oxobutansäure und/oder 3-Hydroxy-2-(2-hydroxyethyl)-2-butensäure ausgewählt ist, und gegebenenfalls Phosphor enthält, wodurch eine Katalysatorvorstufe erhalten wird.

13. Verfahren nach Anspruch 11, wobei der Schritt a) die folgenden Schritte umfasst:
a1) man imprägniert einen Träger auf Basis von Aluminiumoxid oder Siliciumdioxid oder Siliciumdioxid-Aluminiumoxid mit mindestens einer Lösung, die mindestens ein Element der Gruppe VIB, mindestens ein Element der Gruppe VIII und gegebenenfalls Phosphor enthält, wodurch ein imprägnierter Träger erhalten wird,
a2) man trocknet den in Schritt a1) erhaltenen imprägnierten Träger bei einer Temperatur von weniger als 200 °C, wodurch ein getrockneter imprägnierter Träger erhalten wird, und gegebenenfalls calciniert man den getrockneten imprägnierten Träger, wodurch ein calcinierter imprägnierter Träger erhalten wird,
a3) man imprägniert den in Schritt a2) erhaltenen getrockneten und gegebenenfalls calcinierten imprägnierten Träger mit einer Imprägnierlösung, die mindestens ein Additiv, das aus 2-Acetylbutyrolacton, 2-(2-Hydroxyethyl)-3-oxobutansäure und/oder 3-Hydroxy-2-(2-hydroxyethyl)-2-butensäure ausgewählt ist, umfasst, wodurch eine Katalysatorvorstufe erhalten wird,
a4) gegebenenfalls lässt man die in Schritt a3) erhaltene Katalysatorvorstufe reifen.

14. Verfahren nach Anspruch 11, wobei der Schritt a) die folgenden Schritte umfasst:
a1') man stellt einen Träger, der mindestens ein Additiv, das aus 2-Acetylbutyrolacton, 2-(2-Hydroxyethyl)-3-oxobutansäure und/oder 3-Hydroxy-2-(2-hydroxyethyl)-2-butensäure ausgewählt ist, und gegebenenfalls mindestens einen Teil des Phosphors umfasst, her,
a2') man imprägniert den in Schritt a1') erhaltenen Träger mit einer Imprägnierlösung, die mindestens ein Element der Gruppe VIB, mindestens ein Element der Gruppe VIII und gegebenenfalls Phosphor umfasst, wodurch eine Katalysatorvorstufe erhalten wird,
a3') gegebenenfalls lässt man die in Schritt a2') erhaltene Katalysatorvorstufe reifen.

15. Verfahren nach Anspruch 11, wobei der Schritt a) die folgenden Schritte umfasst:
a1") man bringt eine Lösung, die mindestens ein Element der Gruppe VIB, mindestens ein Element der Gruppe VIII, mindestens eine organische Verbindung, die Sauerstoff und/oder Stickstoff und/oder Schwefel enthält, und gegebenenfalls Phosphor durch Coimprägnieren mit einem Träger auf Basis von Aluminiumoxid oder Siliciumdioxid oder Siliciumdioxid-Aluminiumoxid in Kontakt, wodurch ein imprägnierter Träger erhalten wird,
a2") man trocknet den imprägnierten Träger aus Schritt a1") bei einer Temperatur von weniger als 200 °C ohne anschließende Calcinierung, wodurch ein getrockneter imprägnierter Träger erhalten wird,
a3") man bringt den getrockneten imprägnierten Träger aus Schritt a2") mit einer Lösung mindestens einer organischen Verbindung, die Sauerstoff und/oder Stickstoff und/oder Schwefel enthält und mit der in Schritt a1") verwendeten Verbindung identisch oder davon verschieden ist, in Kontakt, wodurch eine Katalysatorvorstufe erhalten wird,
a4") gegebenenfalls lässt man die in Schritt a3") erhaltene Katalysatorvorstufe reifen,
wobei mindestens eine der organischen Verbindungen von Schritt a1") oder Schritt a3") aus 2-Acetylbutyrolacton, 2-(2-Hydroxyethyl)-3-oxobutansäure und/oder 3-Hydroxy-2-(2-hydroxyethyl)-2-butensäure ausgewählt wird.

16. Verfahren nach Anspruch 11, wobei der Schritt a) die folgenden Schritte umfasst:
a1"') man imprägniert einen regenerierten Katalysator, der einen Träger auf Basis von Aluminiumoxid oder Siliciumdioxid oder Siliciumdioxid-Aluminiumoxid, mindestens eine Komponente eines Elements der Gruppe VIB, mindestens eine Komponente eines Elements der Gruppe VIII und gegebenenfalls Phosphor enthält, mit einer Imprägnierlösung, die mindestens ein Additiv, das aus 2-Acetylbutyrolacton, 2-(2-Hydroxyethyl)-3-oxobutansäure und/oder 3-Hydroxy-2-(2-hydroxyethyl)-2-butensäure ausgewählt ist, umfasst, wodurch eine Katalysatorvorstufe erhalten wird,
a2"') gegebenenfalls lässt man die in Schritt a1"') erhaltene Katalysatorvorstufe reifen.

17. Verfahren nach einem der Ansprüche 11 bis 16, wobei das Gesamtmolverhältnis von Additiv bzw. Additiven, das bzw. die aus 2-Acetylbutyrolacton, 2-(2-Hydroxyethyl)-3-oxobutansäure und/oder 3-Hydroxy-2-(2-hydroxyethyl)-2-butensäure ausgewählt ist bzw. sind, zu Element bzw. Elementen der Gruppe VIII zwischen 0,1 und 5,0 mol/mol liegt.

18. Verwendung des Katalysators nach einem der Ansprüche 1 bis 10 oder des nach einem der Ansprüche 11 bis 17 hergestellten Katalysators bei einem Verfahren zum Hydrotreating und/oder Hydrocracking von Kohlenwasserstoffschnitten.

## Claims

1. Catalyst that comprises a substrate based on alumina or silica or silica-alumina, at least one element from group VIII, at least one element from group VIB, and at least one additive that is selected from among 2-acetylbutyrolactone, 2-(2-hydroxyethyl)-3-oxobutanoic acid, and/or 3-hydroxy-2-(2-hydroxyethyl)-2-butenoic acid.

2. Catalyst according to Claim 1, in which the content of element from group VIB is between 5 and 40% by weight that is expressed in terms of metal oxide from group VIB in relation to the total weight of the catalyst, and the content of element from group VIII is between 1 and 10% by weight that is expressed in terms of metal oxide from group VIII in relation to the total weight of the catalyst.

3. Catalyst according to Claim 1 or 2, in which the molar ratio of element from group VIII to element from group VIB in the catalyst is between 0.1 and 0.8.

4. Catalyst according to one of Claims 1 to 3, which also contains phosphorus, with the phosphorus content being between 0.1 and 20% by weight that is expressed in terms of P₂O₅ in relation to the total weight of the catalyst, and the molar ratio of phosphorus to the element from group VIB in the catalyst is greater than or equal to 0.05.

5. Catalyst according to one of Claims 1 to 4, in which the total content of additive(s) selected from among 2-acetylbutyrolactone, 2-(2-hydroxyethyl)-3-oxobutanoic acid, and/or 3-hydroxy-2-(2-hydroxyethyl)-2-butenoic acid is between 1 and 45% by weight in relation to the total weight of the catalyst.

6. Catalyst according to one of Claims 1 to 5, which contains an organic compound in addition to the additive that is selected from among 2-acetylbutyrolactone, 2-(2-hydroxyethyl)-3-oxobutanoic acid, and/or 3-hydroxy-2-(2-hydroxyethyl)-2-butenoic acid, with said organic compound containing oxygen and/or nitrogen and/or sulfur.

7. Catalyst according to Claim 6, in which the organic compound is selected from a compound that comprises one or more chemical groups selected from among the following groups:
carboxylic, alcohol, thiol, thioether, sulfone, sulfoxide, ether, aldehyde, ketone, ester, carbonate, amine, nitrile, imide, oxime, urea, and amide.

8. Catalyst according to Claim 7, in which the organic compound is selected from among triethylene glycol, diethylene glycol, ethylene glycol, ethylenediaminetetraacetic acid (EDTA), maleic acid, malonic acid, citric acid, dimethylformamide, N-methylpyrrolidone, propylene carbonate, bicine, or tricine.

9. Catalyst according to one of Claims 1 to 8, in which the substrate contains from 0.1 to 50% by weight of zeolite.

10. Catalyst according to one of Claims 1 to 9, **characterized in that** it is at least partially sulfurized.

11. Method for preparation of a catalyst according to one of Claims 1 to 10 that comprises the following steps:
a) at least one component of an element from group VIB, at least one component of an element from group VIII, at least one additive that is selected from among 2-acetylbutyrolactone, 2-(2-hydroxyethyl)-3-oxobutanoic acid, and/or 3-hydroxy-2-(2-hydroxyethyl)-2-butenoic acid, and optionally phosphorus are brought into contact with a substrate based on alumina or silica or silica-alumina, or a regenerated catalyst that contains a substrate based on alumina or silica or silica-alumina, at least one component of an element from group VIB, at least one component of an element from group VIII, and optionally phosphorus is brought into contact with at least one additive that is selected from among 2-acetylbutyrolactone, 2-(2-hydroxyethyl)-3-oxobutanoic acid, and/or 3-hydroxy-2-(2-hydroxyethyl)-2-butenoic acid, in such a way as to obtain a catalyst precursor,
b) said catalyst precursor that is obtained from step a) is dried at a temperature that is lower than 200°C, without being calcined subsequently.

12. Method according to Claim 11, in which step a) is the next step:
a') a substrate based on alumina or silica or silica-alumina is impregnated by at least one solution that contains at least one element from group VIB, at least one element from group VIII, at least one additive that is selected from among 2-acetylbutyrolactone, 2-(2-hydroxyethyl)-3-oxobutanoic acid, and/or 3-hydroxy-2-(2-hydroxyethyl)-2-butenoic acid, and optionally phosphorus in such a way as to obtain a catalyst precursor.

13. Method according to Claim 11, in which step a) comprises the following steps:
a1) a substrate based on alumina or silica or silica-alumina is impregnated by at least one solution that contains at least one element from group VIB, at least one element from group VIII, and optionally phosphorus to obtain an impregnated substrate,
a2) the impregnated substrate that is obtained in step a1) is dried at a temperature that is lower than 200°C to obtain a dried impregnated substrate, and optionally the dried impregnated substrate is calcined to obtain a calcined impregnated substrate,
a3) the dried and optionally calcined impregnated substrate that is obtained in step a2) is impregnated by an impregnation solution that comprises at least one additive that is selected from among 2-acetylbutyrolactone, 2-(2-hydroxyethyl)-3-oxobutanoic acid, and/or 3-hydroxy-2-(2-hydroxyethyl)-2-butenoic acid in such a way as to obtain a catalyst precursor,
a4) optionally, the catalyst precursor that is obtained in step a3) is allowed to mature.

14. Method according to Claim 11, in which step a) comprises the following steps:
a1') a substrate that comprises at least one additive that is selected from among 2-acetylbutyrolactone, 2-(2-hydroxyethyl)-3-oxobutanoic acid, and/or 3-hydroxy-2-(2-hydroxyethyl)-2-butenoic acid, and optionally at least one part of phosphorus is prepared,
a2') the substrate that is obtained in step a1') is impregnated by an impregnation solution that comprises at least one element from group VIB, at least one element from group VIII, and optionally phosphorus in such a way as to obtain a catalyst precursor,
a3') optionally, the catalyst precursor that is obtained in step a2') is allowed to mature.

15. Method according to Claim 11, in which step a) comprises the following steps:
a1") a solution that contains at least one element from group VIB, at least one element from group VIII, at least one organic compound that contains oxygen and/or nitrogen and/or sulfur, and optionally phosphorus is brought into contact by co-impregnation with a substrate based on alumina or silica or silica-alumina in such a way as to obtain an impregnated substrate,
a2") the impregnated substrate that is obtained from step a1") is dried at a temperature that is lower than 200°C, without being calcined subsequently, to obtain a dried impregnated substrate,
a3") the dried impregnated substrate that is obtained from step a2") is brought into contact with a solution of at least one organic compound that contains oxygen and/or nitrogen and/or sulfur that is identical to or different from the one that is used in step a1") in such a way as to obtain a catalyst precursor,
a4") optionally, the catalyst precursor that is obtained in step a3") is allowed to mature, and at least one of the organic compounds of step a1") or of step a3") is selected from among 2-acetylbutyrolactone, 2-(2-hydroxyethyl)-3-oxobutanoic acid, and/or 3-hydroxy-2-(2-hydroxyethyl)-2-butenoic acid.

16. Method according to Claim 11, in which step a) comprises the following steps:
a1"') a regenerated catalyst that contains a substrate based on alumina or silica or silica-alumina, at least one component of an element from group VIB, at least one component of an element from group VIII, and optionally phosphorus is impregnated by an impregnation solution that comprises at least one additive that is selected from among 2-acetylbutyrolactone, 2-(2-hydroxyethyl)-3-oxobutanoic acid, and/or 3-hydroxy-2-(2-hydroxyethyl)-2-butenoic acid in such a way as to obtain a catalyst precursor,
a2"') optionally, the catalyst precursor that is obtained in step a1"') is allowed to mature.

17. Method according to one of Claims 11 to 16, in which the total molar ratio of the additive(s) selected from among 2-acetylbutyrolactone, 2-(2-hydroxyethyl)-3-oxobutanoic acid, and/or 3-hydroxy-2-(2-hydroxyethyl)-2-butenoic acid to element(s) from group VIII is between 0.1 and 5.0 mol/mol.

18. Use of the catalyst according to one of Claims 1 to 10 or prepared according to one of Claims 11 to 17 in a method for hydrotreatment and/or hydrocracking of hydrocarbon fractions.
